(19) Europäisches Patentamt / European Patent Office / Office européen des brevets

(11) **EP 3 728 152 B1**

(12) **EUROPÄISCHE PATENTSCHRIFT**

(45) Veröffentlichungstag und Bekanntmachung des Hinweises auf die Patenterteilung:
**10.11.2021  Patentblatt 2021/45**

(21) Anmeldenummer: **18826613.4**

(22) Anmeldetag: **18.12.2018**

(51) Int Cl.:
**C03C 3/097** (2006.01)   **C03C 3/087** (2006.01)
**C03C 1/00** (2006.01)   **C03C 10/00** (2006.01)
**C03C 4/10** (2006.01)

(86) Internationale Anmeldenummer:
**PCT/EP2018/085584**

(87) Internationale Veröffentlichungsnummer:
**WO 2019/121742 (27.06.2019 Gazette 2019/26)**

(54) **TRANSPARENTE, EINGEFAERBTE LITHIUMALUMINIUMSILIKAT-GLASKERAMIK SOWIE VERFAHREN ZUR HERSTELLUNG UND VERWENDUNG DER GLASKERAMIK**

TRANSPARENT, ENCAPSULATED LITHIUM ALUMINIUM SILICATE GLASS CERAMIC AND METHOD FOR THE PRODUCTION AND USE OF THE GLASS CERAMIC

VITROCÉRAMIQUE COLORÉE, TRANSPARENTE, À BASE DE SILICATE DE LITHIUM ET D'ALUMINIUM AINSI QUE PROCÉDÉ POUR LA FABRICATION ET UTILISATION DE LA VITROCÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017  DE 102017131051**
**07.05.2018  DE 102018110908**
**07.05.2018  DE 202018102534 U**

(43) Veröffentlichungstag der Anmeldung:
**28.10.2020  Patentblatt 2020/44**

(73) Patentinhaber: **SCHOTT AG**
**55122 Mainz (DE)**

(72) Erfinder:
• **SIEBERS, Friedrich**
**55283 Nierstein (DE)**
• **HOCHREIN, Oliver**
**55130 Mainz (DE)**

(56) Entgegenhaltungen:
DE-A1- 3 927 174      US-A- 4 285 728
US-A1- 2008 207 424      US-A1- 2016 168 018

**Beschreibung**

Die Erfindung betrifft eine transparente, eingefärbte Lithiumaluminiumsilikat-Glaskeramik, gemäß dem Oberbegriff des Anspruchs 1.

Die Erfindung bezieht sich auch auf Verfahren zu deren Herstellung und die Verwendung einer solchen Glaskeramik.

Es ist generell bekannt, dass sich Gläser aus dem System $Li_2O-Al_2O_3-SiO_2$ in Glaskeramiken mit Hochquarz-Mischkristallen (HQMK) oder Keatit-Mischkristallen (KMK) als Hauptkristallphasen umwandeln lassen. Für den ersten Typ von Glaskeramiken finden sich in der Literatur auch die Synonyme "β-Quarz" oder "β-Eukryptit" und für den zweiten Typ "β-Spodumen" als Bezeichnung für die Kristallphasen.

Schlüsseleigenschaften dieser LAS-Glaskeramiken sind ihre Transparenz, gute chemische Beständigkeit gegen Säuren und Laugen, hohe mechanische Festigkeit und ihr niedriger thermischer Ausdehnungskoeffizient in einem Temperaturbereich von Raumtemperatur bis Anwendungstemperatur von $\alpha_{20/700} < 1{,}5 \cdot 10^{-6}/K$. In der Regel wird das thermische Ausdehnungsverhalten so eingestellt, dass die Werkstoffe im Bereich ihrer Anwendungstemperaturen über sehr niedrige Ausdehnung, meist $0 \pm 1 \cdot 10^{-6}/K$ verfügen. Aufgrund der niedrigen thermischen Ausdehnung bei ihren Anwendungstemperaturen, kombiniert mit hoher mechanischer Festigkeit besitzen diese Glaskeramiken eine ausgezeichnete Temperaturunterschiedsfestigkeit und Temperaturwechselbeständigkeit. Anforderungen für den Einsatz bei hohen Temperaturen beinhalten, dass die die Glaskeramiken die geforderten Eigenschaften (wie z.B. thermische Ausdehnung, Transmission, Aufbau von Spannungen) während ihrer Lebensdauer beibehalten. Hinsichtlich Temperaturbelastbarkeit ist die wenn auch geringe Schrumpfung der Glaskeramik (compaction) bei hohen Anwendungstemperaturen die kritische Größe. Da die Glaskeramikartikel im Einsatz meist ungleichmäßig durchwärmt werden, bauen sich mit der Zeit durch die unterschiedlich starke Schrumpfung Spannungen im Artikel auf.

Die großtechnische Herstellung von LAS-Glaskeramiken erfolgt in mehreren Stufen. Zunächst wird das kristallisierbare Ausgangsglas aus einem Gemisch aus Scherben und pulverförmigen Gemengerohstoffen geschmolzen und geläutert. Die Glasschmelze erreicht dabei Temperaturen von 1550 °C bis maximal 1750 °C, meist bis zu 1700 °C. Fallweise wird auch eine Hochtemperaturläuterung oberhalb 1750°C, üblicherweise bei Temperaturen um 1900°C eingesetzt. Arsen- und Antimonoxid sind bei konventionellen Läutertemperaturen unter 1700 °C hinsichtlich guter Blasenqualitäten technisch und wirtschaftlich bewährte Läutermittel. In neueren Schriften wird auch der Einsatz des umweltfreundlichen Läutermittels $SnO_2$ allein oder in Kombination mit einem oder mehreren Läuterzusätzen wie Halogeniden (F, Cl, Br), $CeO_2$, $MnO_2$, $Fe_2O_3$, Schwefelverbindungen propagiert.

Nach dem Einschmelzen und Läutern erfährt das Glas üblicherweise eine Heißformgebung durch Gießen, Pressen, Walzen oder Floaten. Für viele Anwendungen werden die Glaskeramiken in flacher Form benötigt, beispielsweise in Form von Scheiben. Das Walzen und neuerdings auch Floaten wird zur Herstellung der Platten eingesetzt. Für die wirtschaftliche Herstellung dieser LAS-Gläser sind eine niedrige Schmelztemperatur und eine niedrige Verarbeitungstemperatur $V_A$ bei der Heißformgebung gewünscht. Weiterhin darf das Glas bei der Formgebung keine Entglasung zeigen, das heißt, es dürfen sich keine größeren Kristalle oberhalb von etwa 5 μm bilden, die in den Glaskeramik-Artikeln die Festigkeit erniedrigen oder visuell störend sind. Da die Formgebung in der Nähe der Verarbeitungstemperatur $V_A$ (Viskosität $10^4$ dPas) des Glases stattfindet, muss gewährleistet sein, dass die obere Entglasungstemperatur der Schmelze in der Nähe und bevorzugt unter der Verarbeitungstemperatur liegt, um die Bildung größerer Kristalle zu vermeiden.

Der bei der Formgebung über Walzen kritische Bereich ist der Kontakt der Glasschmelze mit der Ziehdüse aus Edelmetall (üblicherweise aus einer Pt/Rh Legierung), bevor das Glas durch die Walzen geformt und abgekühlt wird. Beim Floaten ist es der Glaskontakt mit der spout lip und der vordere Bereich des Floatbades im Kontakt mit dem flüssigen Sn, in dem das Glas eine hohe Kristallwachstumsgeschwindigkeit besitzt.

Das kristallisierbare LAS-Glas wird in einem anschließenden Temperaturprozess durch gesteuerte Kristallisation (Keramisierung) in die Glaskeramik umgewandelt. Diese Keramisierung erfolgt in einem zweistufigen Temperaturprozess, bei dem zunächst durch Keimbildung bei einer Temperatur zwischen 680 und 800°C Keime, üblicherweise aus $ZrO_2/TiO_2$-Mischkristallen, erzeugt werden. Auch $SnO_2$ ist an der Keimbildung beteiligt. Die Hochquarz-Mischkristalle wachsen bei erhöhter Temperatur auf diesen Keimen auf. Bei der maximalen Herstelltemperatur von meist 850 bis 960°C wird das Gefüge der Glaskeramik homogenisiert und die optischen, physikalischen und chemischen Eigenschaften eingestellt. Für eine wirtschaftliche Herstellung sind kurze Keramisierungszeiten vorteilhaft.

Die weitere Umwandlung in Keatit-Mischkristalle erfolgt bei Temperaturerhöhung in einem Temperaturbereich von ca. 930 °C bis 1250 °C. Mit der Umwandlung erhöht sich der thermische Ausdehnungskoeffizient der Glaskeramik. In einem Übergangsbereich sind transparente Glaskeramiken mit Keatit-Mischkristallen als Hauptkristallphase darstellbar, meist mit Hochquarz-Mischkristallen als Nebenphase. Bei weiterer Temperaturerhöhung kommt es zu weiterem Kristallwachstum und durch die damit einhergehende Lichtstreuung wandelt sich das transparente in transluzentes und weiter in opakes Aussehen um.

Für das Aussehen und die optischen Eigenschaften von Glaskeramiken sind Transmission und Streuung wichtige Eigenschaften.

2

Eine Klasse solcher Glaskeramiken sind die transparenten, nicht eingefärbten Glaskeramiken. Diese Glaskeramiken sind transparent, da sie eine geringe Streuung aufweisen und nicht eingefärbt, da bei Ihrer Herstellung keine Färbemittel zugegeben werden.

Bei den transparenten, nicht eingefärbten Glaskeramiken ist eine hohe Helligkeit, also ein hoher Lichttransmissionsgrad, gewünscht. Deshalb beträgt der Lichttransmissionsgrad solcher Glaskeramiken bei einer Dicke von 4 mm mehr als 80 %. Transparente, nicht eingefärbte Glaskeramiken weisen allerdings durch die in den Gemengerohstoffen vorkommenden Verunreinigungen, wie z. B. $Fe_2O_3$, eine geringe Eigenfärbung auf. Diese Eigenfärbung ist unerwünscht und wird durch technische Maßnahmen minimiert. So ist es, wie in der EP 1837312 A1 aufgezeigt, möglich, transparente, nicht eingefärbte Glaskeramiken mit rotbraunem Farbstich durch Dotierung mit $Nd_2O_3$ physikalisch zu entfärben.

Die transparenten, eingefärbten Glaskeramiken unterscheiden sich von den transparenten, nicht eingefärbten Glaskeramiken dadurch, dass die Transmission über die gezielte Zugabe einer oder mehrerer färbenden Verbindungen, die im Sichtbaren absorbieren, erniedrigt ist. Diese färbenden Verbindungen als Bestandteil der Zusammensetzung einer eingefärbten Glaskeramik erhöhen also im Vergleich zu einer nicht eingefärbten Glaskeramik den Absorptionskoeffizienten der Glaskeramik. Der resultierende spektrale Verlauf der Transmissionskurve für eine definierte Dicke bedingt die Farbe der Glaskeramik und deren Helligkeit.

Synonym zu dem Begriff eingefärbte Glaskeramik wird in der Literatur auch der Begriff volumengefärbte Glaskeramik verwendet. Beide Begriffe stellen darauf ab, dass die Glaskeramik in ihrer Zusammensetzung färbende Bestandteile enthält, die einen Einfluss auf den Absorptionskoeffizienten der Glaskeramik haben. Damit unterscheiden sich diese Materialien fundamental von nicht eingefärbten Glaskeramiken, die zur Farbgebung eines daraus hergestellten Artikels eine farbige Beschichtung aufweisen. Eine solche Beschichtung hat keinerlei Einfluss auf den Absorptionskoeffizienten der Glaskeramik.

Bei der Verwendung als Kochfläche wird die Helligkeit der Glaskeramik üblicherweise auf Werte von 1 - 5 % begrenzt, um eine schwarzes Erscheinungsbild zu erreichen und um die störende Durchsicht auf technische Bauelemente unter der Kochfläche zu verhindern. Dieser Wertebereich sichert die Anzeigefähigkeit, meist mit Leuchtdioden, und vermeidet die Blendung durch strahlende Heizkörper. Bei höheren Werten der Helligkeit oberhalb etwa 2 %, der Wert ist abhängig von den Einbauten unter der Kochfläche und der Beleuchtung von oben, wird üblicherweise eine Maskierung aufgebracht, die meist als blickdichte Unterseitenbeschichtung ausgeführt ist. Die Bereiche für Anzeigen, Displayfenster, Sensoren, leuchtende Projektoren bleiben ohne Beschichtung. Bei anderen Anwendungen, z. B. für Glaskeramik-Kochgeschirr, ist meist eine höhere Helligkeit als 5 % verbunden mit einem bestimmten Farbton gewünscht. Für die vorliegenden transparenten, eingefärbten Glaskeramiken beträgt die Helligkeit Y bis zu 80 %.

Charakteristisch ist, dass die färbenden Verbindungen im kristallisierbaren Glas meist anders als in der daraus hergestellten Glaskeramik färben. Dies wird beispielsweise in den Schriften US 3788865 und US 4285728 für die färbenden Komponenten NiO, $Fe_2O_3$, CoO, $Cr_2O_3$, MnO, CuO, ZnS, $V_2O_5$ einzeln und in Kombinationen beschrieben. Die aufgeführten Transmissionskurven der kristallisierbaren Gläser und der daraus hergestellten Glaskeramiken zeigen, dass die Glaskeramiken infolge ihrer Absorptionsbanden über keine flachen Transmissionsverläufe im Sichtbaren verfügen.

Die gebräuchliche Einfärbung durch $V_2O_5$ stellt sich beim Keramisieren der kristallisierbaren Ausgangsgläser ein. Wie in früheren Untersuchungen (DE 19939787 C2) gezeigt wurde, ist für die Überführung des Vanadiumoxids in den färbenden Zustand ein Redoxvorgang Voraussetzung. Im kristallisierbaren Ausgangsglas färbt das $V_2O_5$ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner fungiert das Läutermittel, in der Regel Antimon-, Arsen- oder Zinnoxid. Es ist anzunehmen, dass das Vanadium nach dem Redoxvorgang teilweise in reduzierter Oxidationsstufe als $V^{4+}$ oder $V^{3+}$ vorliegt und durch Elektronen-Charge-Transfer-Reaktionen intensiv färbt. Neben der Art und Menge der Redoxpartner im Ausgangsglas hat auch der Redoxzustand, der im Glas bei der Schmelze eingestellt wird, z.B. durch hohe Schmelztemperaturen und lange Verweilzeiten bei hohen Temperaturen oder durch Zusätze von reduzierenden Komponenten zum Gemenge einen Einfluss. Einen weiteren Einfluss auf die Farbwirkung des Vanadiumoxids haben die Keramisierungsbedingungen. Insbesondere führen hohe Keramisierungstemperaturen und längere Keramisierungszeiten zu einer stärkeren Einfärbung.

Die Helligkeit (brightness) wird beschrieben durch den Y-Wert gemäß dem CIE-Normfarbsystem CIExyY bei Verwendung der Normlichtart D65. Die deutsche Umsetzung der internationalen CIE-Norm ist in der DIN 5033 festgelegt. In der Literatur finden sich für die Helligkeit auch die Bezeichnungen Lichttransmission, integrale Transmission oder Lichttransmissionsgrad nach DIN EN 410. Aus den gemessenen spektralen Werten der Transmission, also aus den spektralen Transmissionsgraden, in dem Bereich 380 bis 780 nm, der das sichtbare Lichtspektrum repräsentiert, wird die Helligkeit Y, sowie die Farbkoordinaten x und y für eine Lichtart mit definiertem Emissionsspektrum der Normlichtart D65, und Beobachterwinkel von 2° berechnet. Jedes von einer Lichtquelle emittierte Licht besitzt einen Farbort mit x und y Koordinaten innerhalb der Spektralfarblinie des CIExyY-Farbraums. Beispielsweise liegt der Farbort von Licht der Normlichtart D65 und einem Beobachterwinkel von 2° bei x = 0,31 und y = 0,33.

Ebenfalls innerhalb des durch die Spektralfarblinie aufgespannten Farbraums liegt die sogenannte Schwarzkörperkurve. Jeder Punkt auf der Schwarzkörperkurve entspricht dem Farbort des von einem Schwarzkörperstrahler emittierten Lichts bei einer definierten Temperatur. Beispielsweise entspricht die Normlichtart D65 per Definition einem Schwarzkörperstrahler mit einer Temperatur von ca. 6.500 K. Dieser Kurve kommt für die Wahrnehmung des Menschen eine besondere Rolle zu, da die Sonne ebenfalls einem Schwarzkörperstrahler entspricht und somit die Farbe von Sonnenlicht auf der Schwarzkörperkurve liegt. Je nach Stand der Sonne verschiebt sich der Farbort zwischen kühleren und wärmeren Farborten, dabei entspricht eine Farbtemperatur von 20.000 K einem klaren Himmel und eine Temperatur von 3.500 K einer Abendsonne kurz vor Beginn der Dämmerung. Farborte auf oder in der Nähe der Schwarzkörperkurve werden deshalb als Weiß und besonders natürlich wahrgenommen.

Eine weitere Besonderheit im CIExyY-Farbraum stellt der sogenannte Unbuntpunkt bei x= 0,33 und y = 0,33 dar. Dieser Farbort entspricht einer theoretischen Lichtquelle, die über den gesamten sichtbaren Spektralbereich mit gleicher Intensität emittiert (Normlichtart E) und somit alle Spektralfarben zu gleichen Anteilen enthält.

Wenn Licht einer bestimmten Lichtart durch ein transparentes eingefärbtes Material hindurchtritt, entspricht das transmittierte Lichtspektrum aufgrund der üblicherweise unterschiedlichen Transmission des Materials bei unterschiedlichen Wellenlängen, also aufgrund unterschiedlicher Absorptionskoeffizienten des Materials bei unterschiedlichen Wellenlängen, im Allgemeinen nicht mehr dem der ursprünglichen Lichtart. Misst man also den Farbort von Licht vor und nach Transmission durch ein transparentes eingefärbtes Material, so misst man insbesondere unterschiedliche x und y Farbkoordinaten. Das Material bewirkt also eine Verschiebung des Farborts des transmittierten Lichts. Einzige Ausnahme hiervon sind Neutraldichtefilter, die per Definition bei jeder Wellenlänge im sichtbaren Spektralbereich den gleichen spektralen Transmissionsgrad, also auch einen in diesem Spektralbereich konstanten Absorptionskoeffizienten, aufweisen. Bei Durchtritt von Licht durch einen Neutraldichtefilter werden deshalb die x und y Koordinaten des Lichts nicht geändert, sondern nur die Helligkeit Y reduziert.

Für die vorliegenden transparenten eingefärbten Glaskeramiken sind die Helligkeit Y bei Verwendung von Normlicht D65 und 2° Beobachtungswinkel und die Farbkoordinaten x, y angegeben. Im Folgenden werden Glaskeramiken, die den Farbort von transmittiertem Licht nur gering verschieben als "unbunt", "mit geringer Farbe" oder "mit Farbort bzw. -koordinaten in der Nähe des Unbuntpunktes" bezeichnet. Insbesondere die Formulierung "mit Farbort in der Nähe des Unbuntpunktes" ist dabei so zu verstehen, dass Licht der Normlichtart E nach Transmission durch die Glaskeramik einen Farbort in der Nähe von x = 0,33 und y = 0,33 hat. In der Nähe bezieht sich dabei auf einen Abstand von maximal ±0,1.

Alternativ kann das CIELAB Farbsystem mit der Helligkeit L* und den Farbkoordinaten a*, b* verwendet werden. Als Maß für die Farbe wird die Größe c* (Buntheit) herangezogen, gemäß der Berechnung:

$$c* = \sqrt{(a*)^2 + (b*)^2}$$

Das Farbmodell ist in der DIN EN ISO 11664-4 "Colorimetry -- Part 4: CIE 1976 L*a*b* colour space" genormt. Die Koordinaten des CIELAB Farbsystems lassen sich in bekannter Weise aus den Farbkoordinaten x, y und der Helligkeit Y des CIE Farbsystems berechnen. Aufgrund der angestrebten Gleichabständigkeit beschreibt CIELAB die menschliche Farbempfindung besser als das CIExyY-Farbsystem. Im CIELAB Farbsystem ist die Differenz ΔE ein Maß für den Farbabstand zwischen zwei Farborten (L*, a*, b*)$_{i,j}$. Der geringste Farbabstand, der vom gewöhnlichen Betrachter noch unterschieden werden kann, liegt abhängig von der Übung und Anpassungszeit sowie der Beleuchtung zwischen 1 und 5. Diese Zusammenhänge gelten neben der Messung in Transmission auch für die in Remission, d.h. in Aufsicht.

$$\Delta E = \sqrt{(\Delta L*)^2 + (\Delta a*)^2 + (\Delta b*)^2}$$

Beiden Glaskeramik-Typen (transparent, nicht eingefärbt und transparent, eingefärbt) gemeinsam ist die Forderung nach geringer und visuell unauffälliger Streuung. Die geringe Streuung ist wesentlich, damit die Durchsicht auf Gegenstände, ggf. Unterseitenbeschichtungen oder die Ansicht von unterhalb der Glaskeramik angeordneten, Licht aussendende Anzeigen oder Bildschirmen nicht verfälscht werden und die Konturen klar und deutlich sichtbar sind. Die visuelle Auffälligkeit der Streuung ist durch Beurteilung des Erscheinungsbildes von Anzeigen auf einfache Weise zu bewerten.

Die Streuung der Glaskeramiken wird im Rahmen dieser Schrift weiterhin durch Messung der Trübung (engl. Haze) bestimmt. Trübung ist nach ASTM D1003-13 der prozentuale Anteil durchgelassenen Lichts, der vom eingestrahlten Lichtbündel im Mittel um mehr als 2,5° abweicht. Maßgeblich für die Streuung sind Kristallitgröße, Unterschiede in den Brechzahlen zwischen Kristallen und Restglas, sowie Einschlüsse und Inhomogenitäten. Bei Haze-Werten von größer als 10 % ist die Streuung in der Regel störend und visuell auffällig. Für die Beurteilung der Konturenschärfe von Anzeigen ist die praxisnahe Messung mit leuchtenden Anzeigen ergänzend angeraten, da die Auffälligkeit der Streuung auch von anderen Faktoren wie der Umgebungsbeleuchtung und dem Abstand der Anzeigen von der Glaskeramik abhängt.

Für eine Reihe von Anwendungen, z. B. als Kochfläche, Kaminscheibe und Sichtscheibe ist es wünschenswert, dass es bei der Durchsicht auf Gegenstände oder bei Licht emittierenden Anzeigen zu keiner oder nur geringer Farbänderung kommt. Gegenstände hinter der Glaskeramik sind dann farbgetreu sichtbar. Die Farbe polychromatischer Anzeigen, wie insbesondere weiße LED, RGB-LED, OLED, Projektoren, Leuchtstoffröhren, Displays und Bildschirme wird beim Durchgang des Lichtes durch die Glaskeramik nicht oder nur wenig verändert. Bei farbigen meist als LED ausgebildeten Anzeigen, z. B. violetten, blauen, grünen, gelben, orangen, roten, die im Wesentlichen monochromatisch sind, ist es wünschenswert, dass ihre Intensitäten beim Lichtdurchgang nicht unterschiedlich absorbiert werden. Dann ist es technisch einfacher und wirtschaftlicher, mehrere LED mit unterschiedlichen Farben zu kombinieren, da handelsübliche LED ohne besondere elektronische Ansteuerung zur Korrektur der Intensitäten verwendet werden können.

Diese Forderungen nach geringer Farbänderung bedeuten für die spektrale Transmission der Glaskeramik im Sichtbaren einen möglichst flachen Verlauf der Kurve ohne spektrale Bereiche mit höherer bzw. niedrigerer Transmission, wie sie durch die Absorptionsbanden der färbenden Verbindungen üblicherweise hervorgerufen werden. Insbesondere der Wellenlängenbereich von 470 bis 630 nm, bei dem das menschliche Auge eine höhere Wahrnehmungsempfindlichkeit besitzt, ist hier maßgeblich.

Andererseits sollen die färbenden Verbindungen aber durch ihre Absorption die für die Anwendung gewünschte Helligkeit der transparenten, eingefärbten Glaskeramik sicherstellen. Dem menschlichen Betrachter erscheinen diese gewünschten Glaskeramiken dann nahezu ohne Farbe, grau gefärbt.

Im Unterschied zu Glaskeramiken ist es bei Gläsern aufgrund der anderen, breiteren Absorptionsbanden möglich, den flachen Transmissionsverlauf und den grauen Farbton darzustellen. So beschreibt die US 20150274579 A1 Platten aus vorgespanntem Glas für Induktionskochflächen. Mit dem Gehalt an färbenden Verbindungen von 0,8-1,8 Gew.% $Fe_2O_3$, 0,02-0,06 Gew.% $CoO$, 0-0,005 Gew.% $Se$ und 0-0,1 Gew.% $Cr_2O_3$ ist es möglich, den gewünschten flachen Transmissionsverlauf zwischen 430 und 630 nm und ein graues Glas mit Lichttransmission von höchstens 10 % bei 4 mm Dicke herzustellen, das für die Anzeige mit weiße LED Vorteile bietet. Für die Darstellung einer grauen Glaskeramik sind diese Farboxide jedoch nicht geeignet, da ihre Farbwirkungen in Glaskeramiken anders sind und keinen flachen Transmissionsverlauf erzeugen können.

Transparente, eingefärbte Glaskeramiken mit geringer Farbe, also solche mit geringer Buntheit c*, bzw. Farbkoordinaten nahe am Unbuntpunkt und damit in Durchsicht neutralem Grauton sind aus dem Stand der Technik nicht bekannt. Dies liegt darin begründet, dass die Absorptionsbanden bei der Kristallisation meist schmaler werden und sich ungünstig verschieben. So färbt z. B. das $CoO$ im Glas blau, in der Glaskeramik purpurfarbig. Weiter entstehen in der Glaskeramik neue Absorptionsbanden im kurzwelligen Bereich des Spektrums durch intensiv färbende Fe/Ti- und Sn/Ti-Farbkomplexe.

So beschreibt die JP H5051235 A2 eine farbarme, also graue Glaskeramik mit Helligkeit von höchstens 75 %, die bei $Fe_2O_3$-Gehalten von 0,08 - 0,8 Gew.% über hohe Gehalte an $Nd_2O_3$ von 0,8 - 2 Gew.% entfärbt ist, was wegen der hohen Kosten des $Nd_2O_3$ wirtschaftlich nachteilig ist. Außerdem lässt sich der gewünschte flache Transmissionsverlauf wegen der schmale Absorptionsbanden des Nd nicht erreichen.

In der Schrift DE 2844030 A1 wird ein Verfahren zur Herstellung einer transparenten, getönten Glaskeramik beschrieben, bei dem zunächst die natürliche, durch Oxide des Titans, Eisens, Natriums und Kaliums hervorgerufene bernsteinartige Eigenfärbung, durch Zugabe von $Nd_2O_3$ kompensiert und so eine graue Glaskeramik erzeugt wird. Durch weitere Zugabe von geringen Mengen an Molybdän-, Wolfram- und/oder Vanadiumoxid werden rauchgraue, hellgelbe oder kastanienfarbige Einfärbungen erreicht. Die Zugaben der Farboxide führen in dieser Glaskeramik vom Unbuntpunkt weg in Richtung Gelb. Auch dieses Verfahren hat wegen der hohen Kosten und der schmalen Absorptionsbanden des $Nd_2O_3$ Nachteile.

In einer Reihe neuerer Schriften werden mit Vanadiumoxid gefärbte Glaskeramiken für Kochflächen mit verbesserter Anzeigefähigkeit beschrieben.

In der WO 2010102859 A1 wird eine solche Kochfläche offenbart. Um einem Bediener bei einer solchen Kochfläche eine verbesserte Betriebsanzeige mit deutlich verbessertem Informationsgehalt zur Verfügung zu stellen, ist es erfindungsgemäß vorgesehen, dass die Glaskeramik Transmissionswerte von größer als 0,1 % im Bereich des sichtbaren Lichtes im gesamten Wellenlängenbereich größer als 450 nm, eine Lichttransmission im Sichtbaren von 0,8-5 % und eine Transmission im Infraroten bei 1600 nm von 45-85 % aufweist, dass eine Anzeigevorrichtung vorgesehen ist, und dass die Anzeigevorrichtung eine Anzeigeeinrichtung aufweist, die unterschiedliche Betriebszustände mit unterschiedlichen Farben und/oder Symbolen anzeigend ausgebildet ist. In einer bevorzugten Ausführung sind anstelle oder in Ergänzung zu den üblichen roten Anzeigen eine oder mehrere mehrfarbige Anzeigen, wie blaue, grüne, gelbe, orange oder weiße eingesetzt. Der aufgezeigte Transmissionsverlauf der Glaskeramiken kommt den Forderungen nach einem flachen Verlauf nahe, hat aber den Nachteil, dass die spektrale Transmission im langwelligen Spektralbereich ab etwa 550 nm steil ansteigt. Dadurch wird die Intensität von blauen und grünen LED durch die Glaskeramik deutlich stärker als die von roten LED verringert. Die Farbe der Glaskeramik wird durch die höhere Transmission im langwelligen Bereich des Spektrums vom Weiß- bzw. Unbuntpunkt weg in Richtung rot verlagert und polychromatische Anzeigen, wie z. B. weiße LED, sind farblich verändert.

Transmissionsverläufe die eine Anzeige mit blauen LED erlauben, zeigen auch die mit Vanadiumoxid gefärbten Glaskeramiken, die in den Schriften WO 2010137000 A2 und US 2012085336 AA offenbart werden. In der ersten Schrift besitzen die Glaskeramiken bei einer Dicke von 3 mm eine Helligkeit zwischen 1,5 und 5 % sowie eine Transmission von größer als 0,5 % für jede Wellenlänge zwischen 450 und 480 nm. In der zweiten Schrift wird eine Glaskeramikplatte offenbart, die bei 4 mm Dicke eine Transmission zwischen 0,2 und 4 % für jede Wellenlänge zwischen 400 und 500 nm besitzt. Auch in diesen Schriften wird der gewünschte flache Transmissionsverlauf nicht erreicht.

Die US 20130098903 A1 offenbart eine Kochvorrichtung, bestehend aus inneren Elementen, darunter wenigstens ein Heizmittel, Steuer- und/oder Kontrollmittel sowie wenigstens eine lichtemittierende Anzeige, die nicht rot ist, wobei die innenliegenden Elemente durch eine Platte aus Glas oder Vanadium-gefärbter Glaskeramik abgedeckt sind. Die Platten haben eine Lichttransmission von 2,3-40 % und eine spektrale Transmission von wenigstens 0,6 % für mindestens eine Wellenlänge zwischen 420 und 480 nm. Die Kochvorrichtung hat oberhalb, unterhalb oder innerhalb wenigstens ein Abdeckmittel zum Verdecken der innenliegenden Elemente.

In diesen neueren Glaskeramik-Kochflächen mit verbesserter Anzeigefähigkeit wird $V_2O_5$ zur Einfärbung verwendet, weil es die besondere Eigenschaft besitzt, im Bereich des sichtbaren Lichtes zu absorbieren und im Bereich der Infrarotstrahlung eine hohe Transmission zu erlauben. Der Anstieg der Transmission im langwelligen Bereich des sichtbaren Spektrums und der daher nicht flache Transmissionsverlauf haben den Nachteil, dass die Farborte der Glaskeramik stark vom Weiss-, bzw. Unbuntpunkt abweichen.

Insbesondere ist es mit den aus dem Stand der Technik bekannten Glaskeramiken in Kombination mit technisch und wirtschaftlich verfügbaren Leuchtelementen wie weißen LEDs, Displays, Halogenlampen o.ä. nicht möglich, Leuchterscheinungen zu erzeugen, deren Farbort nach Transmission durch die Glaskeramik im Bereich der Schwarzkörperkurve bei Farbtemperaturen, die denen von Sonnenlicht entsprechen zu realisieren.

Um diesen Nachteil der gefärbten Glaskeramiken aus dem Stand der Technik zu beheben, wurden eine Reihe von technischen Zusatzmaßnahmen entwickelt.

In den Schriften US 20140146530 A1, WO 2012076414 A1 und WO 2012168011 A1 werden Farbfilter, bzw. Farbeindruck-Kompensationsfilter, beschrieben, die im Bereich der Anzeigen auf die Glaskeramik aufgebracht sind und durch stärkere Absorption im langwelligen Bereich des sichtbaren Spektrums die Farbe der Kombination aus Glaskeramik und Filter in Richtung Weiß-, bzw. Unbuntpunkt oder zu einem anderen gewünschten Farbort korrigieren. Damit sind weiße LED und polychromatische Anzeigen sowie Displays und Bildschirme ohne Farbverfälschung oder mit korrigiertem Farbort darstellbar.

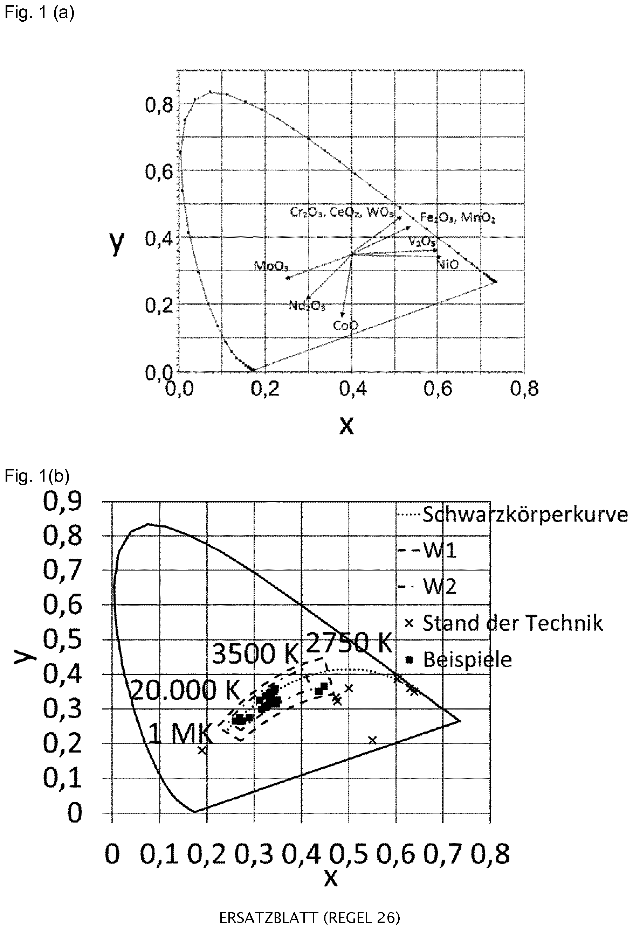

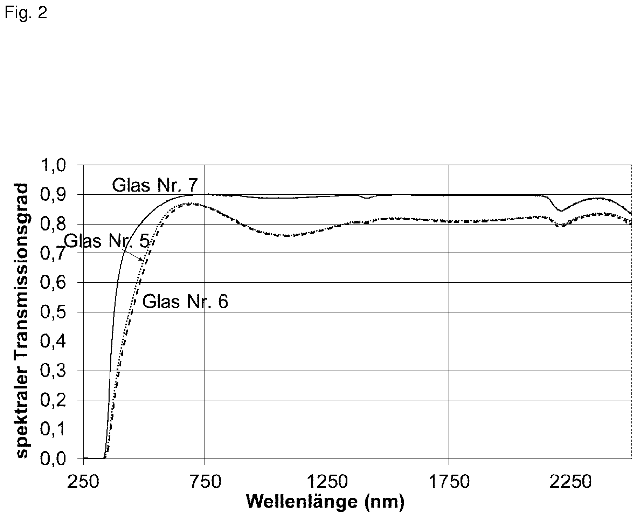

Die Schrift WO 2012076414 A1 beschreibt ausführlich Transmissionsspektren und Farborte verschieden eingefärbter Glaskeramiktypen (Klassen A bis E in Fig. 1 und Fig. 2) für Kochflächen nach dem Stand der Technik im CIE-Normenvalenzsystem CIExyY, 2°.

Für das transmittierte Licht von Anzeigen wird ein bevorzugter Weißbereich entlang der Schwarzkörperkurve definiert, der nur mit Hilfe eines solchen Kompensationsfilters erreicht werden kann. Die Farbkoordinaten dieser Glaskeramiktypen nach dem Stand der Technik sind in der vorliegenden Erfindung in der Abbildung Fig. 1(b) als schwarze Kreuze aufgenommen.

Diese Lösung ist wegen des hohen Aufwandes durch die zusätzlichen Farbfilter wirtschaftlich nachteilig. Technische Nachteile bestehen in der höheren Kratzempfindlichkeit der Filter, der Gefahr der Ablösung und darin, dass diese Filter für Bereiche mit höheren Temperaturen in der Regel nicht geeignet sind. Weiterhin absorbieren diese Farbfilter und verringern die Intensität des durchgelassenen poly- und monochromatischen Lichtes und verschlechtern so die Energieeffizienz des Gesamtsystems.

Für die Farbkorrektur angepasst auf ein Substrat mit spektral inhomogenem Transmissionsverlauf und Farbkoordinaten, die vom Weißpunkt abweichend verschoben sind, werden beispielsweise in der Schrift WO 2012076412 A1, auch elektronische Maßnahmen über farblich steuerbare Leuchtmittel bzw. Anzeigen offenbart. Das Leuchtmittel besteht aus mindestens zwei Grundfarben-Leuchten wobei die Grundfarbenhelligkeit von wenigstens einer Grundfarben-Leuchte korrigiert ist. Technische Beispiele sind z. B. farblich steuerbare RGB-Leuchtdioden oder elektronisch farbkorrigierte LCD- und TFT-Displays. Auch diese Maßnahmen sind wegen der Kosten der elektronischen Bauteile samt Ansteuerung wirtschaftlich nachteilig. Gerade bei Displays ist es zwar möglich, eine Farbkompensation durch eine entsprechende Ansteuerung vorzunehmen, allerdings nur auf Kosten der Gesamthelligkeit des Displays, da die Helligkeit der stärker transmittierten Farben im Verhältnis zu den schwächer transmittierten Farben reduziert werden muss. Um dann aber auf die gewünschte Helligkeit des Displays nach Transmission durch die Glaskeramik zu kommen, müssen teure Displays mit sehr hoher Leuchtdichte verwendet werden.

Eine weitere aufwändige Lösung zur Korrektur der Farbänderungen beim Lichtdurchgang polychromatischer Anzeigen durch die mit Vanadiumoxid gefärbten Glaskeramiken ist in der US 20160281961 A1 offenbart. Dabei enthält der Artikel eine Glaskeramik, eine Lichtquelle und eine lumineszierende Verbindung, die wenigstens eine lumineszierende Fläche auf der Kochfläche bilden. Die lumineszierende Verbindung wandelt das Wellenlängenspektrum der Lichtquelle so um, dass das Licht nach Durchgang durch die Glaskeramik einen gewünschten Farbort hat.

Bei vielen dieser Anwendungen ist auch eine hohe IR-Transmission gewünscht. Je nach Verwendung beziehen sich die Forderungen nach hoher IR-Transmission auf verschiedene Bereiche vom nahen IR bei 800 nm bis zu Wellenlängen von 4 $\mu$m.

Für Glaskeramiken charakteristisch und seitens der Anwendungen toleriert ist die IR-Absorptionsbande im Bereich von 2700 bis 3500 nm, die auf den Einbau von Wasser zurückzuführen ist.

Der Erfindung liegt die Aufgabe zugrunde, eine transparente, eingefärbte Lithiumaluminiumsilikat-Glaskeramik zu finden, die die genannten Nachteile des Standes der Technik überwindet. Die Helligkeit einer solchen Glaskeramik soll sich in einem weiten Bereich einstellen lassen. Ferner sollen sich die Glaskeramiken für eine wirtschaftliche und umweltfreundliche Herstellung eignen. Das heißt gut schmelzbar und läuterbar sein, über niedrige Schmelz- und Formgebungstemperaturen sowie über eine hohe Entglasungsfestigkeit verfügen und in kurzen Zeiten keramisierbar sein. Die erfindungsgemäßen Glaskeramiken sollen allen weiteren Anforderungen genügen, die an ihre Verwendung gestellt werden wie z.B.: chemische Beständigkeit, mechanische Festigkeit, Temperaturbelastbarkeit und hohe Temperatur/Zeitbelastbarkeit hinsichtlich Änderungen ihrer Eigenschaften, wie z.B. thermische Ausdehnung, Transmission, Aufbau von Spannungen.

Diese Aufgabe wird durch die in Patentanspruch 1 beschriebene Lithiumaluminiumsilikat-Glaskeramik gelöst. Bevorzugte Ausführungsformen sind in den abhängigen Ansprüchen angeführt.

Es ist auch Aufgabe der Erfindung, Verfahren zur Herstellung der Glaskeramik und deren Verwendung zu finden.

Die erfindungsgemäßen transparenten, eingefärbten LAS-Glaskeramiken weisen eine Helligkeit Y von 0,1 % bis 80 %, also von mindestens 0,1 % und höchstens 80 %, bei 4 mm Dicke auf und sind dadurch gekennzeichnet, dass Licht der Normlichtart D65 nach Durchtritt durch die Glaskeramik bei 4 mm Dicke einen Farbort im Weißbereich W1 aufweist, der im Chromatizitätsdiagramm CIExyY-2° durch folgende Koordinaten bestimmt ist:

| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Darüber hinaus sind die erfindungsgemäßen Glaskeramiken gekennzeichnet durch eine Zusammensetzung, die in Gew.% auf Oxidbasis im Wesentlichen besteht aus:

| | |
|---|---|
| $Li_2O$ | 3-5 |
| $\Sigma\ Na_2O + K_2O$ | 0,1 - <4 |
| MgO | 0-3 |
| $\Sigma\ CaO + SrO + BaO$ | 0 - 5 |
| ZnO | 0-4 |
| $B_2O_3$ | 0 - 3 |
| $Al_2O_3$ | 18 - 25 |
| $SiO_2$ | 60 - 70 |
| $TiO_2$ | 1,5 - 5,5 |
| $ZrO_2$ | 0 - 2,5 |
| $SnO_2$ | 0,1 - <0,7 |
| $\Sigma\ TiO_2 + ZrO_2 + SnO_2$ | 3 - 6,5 |
| $P_2O_5$ | 0 - 5 |
| $MoO_3$ | 0,01 - 0,3 |
| $Fe_2O_3$ | 0,005 - 0,25 |
| $V_2O_5$ | 0 - 0,02. |

Der Weißbereich W1 ergibt sich dabei als ein Bereich entlang der Schwarzkörperkurve im CIExyY-Farbraum, der von ca. 2.750 K bis ca. 1.000.000 K Farbtemperatur reicht und an der oberen Grenze um einen Wert von ca. y = 0,04 gegenüber der Schwarzkörperkurve nach oben und an der unteren Grenze um ca. y = 0,07 nach unten verschoben ist.

Hieraus ergibt sich der folgende Effekt: Licht der Normlichtart D65 hat per Definition eine Farbtemperatur von ca. 6.500 K und bei direkter Betrachtung mit einem 2° Beobachter einen Farbort von x = 0,31 und y = 0,33. Mit der vorliegenden Erfindung kann also bei Durchtritt von Licht durch das Trennelement der Farbort des Lichtes im Wesentlichen entlang der Schwarzkörperkurve, sowohl zu höheren als auch zu niedrigeren Farbtemperaturen verschoben werden, ohne einen unerwünschten Farbstich zu erzeugen. Weißes Licht wird also nach dem Durchtritt durch die Glaskeramik bei einer Dicke von 4 mm immer noch als weißes Licht wahrgenommen.

Dies ist mit den aus dem Stand der Technik bekannten Glaskeramiken mit einer Transmission von höchstens 80 % nicht möglich.

Der Farbort von Licht nach Durchtritt durch die Glaskeramik kann beispielsweise mit dem Farbmessgerät CS-150 von Konica Minolta direkt gemessen werden. Ebenso ist es möglich, das Transmissionsspektrum der Glaskeramik zu messen und damit und mit Hilfe des bekannten Spektrums von D65-Normlicht und der Augenempfindlichkeit eines 2°-Normalbeobachters entsprechend der Vorgaben des CIE den Farbort zu berechnen.

Anzeigeeinrichtungen wie Displays sind beispielsweise üblicherweise so eingestellt, dass sie weißes Licht mit einer Farbtemperatur von 5.000 K (Warmweiß), 6.500 K (Neutralweiß) oder 9.300 K (Kaltweiß) emittieren. Der erfindungsgemäße Gegenstand ermöglicht es also, mit handelsüblichen Displays ohne weitere notwendige Anpassungen einen für Displays gewünschten Farbort des vom Display emittierten Lichts im Außenbereich des Gegenstandes zu erzeugen.

In einer bevorzugten Ausführungsform ist die Glaskeramik dadurch gekennzeichnet, dass Licht der Normlichtart D65 nach Durchtritt durch die Glaskeramik bei 4 mm Dicke einen Farbort im Weißbereich W2 aufweist, der im Chromatizitätsdiagramm CIExyY-2° durch folgende Koordinaten bestimmt ist:

| Weißbereich W2 | |
|---|---|
| x | y |
| 0,27 | 0,24 |
| 0,25 | 0,27 |
| 0,32 | 0,36 |
| 0,41 | 0,42 |
| 0,42 | 0,36 |
| 0,35 | 0,31 |

Der Weißbereich W2 ergibt sich dabei als ein Bereich entlang der Schwarzkörperkurve im CIExyY-Farbraum, der von ca. 3.500 K bis ca. 20.000 K Farbtemperatur reicht und an der oberen Grenze um einen Wert von ca. y = 0,025 gegenüber der Schwarzkörperkurve nach oben und an der unteren Grenze um ca. y = 0,04 nach unten verschoben ist.

Dieser Bereich erstreckt sich im Vergleich zu W1 also entlang eines kürzeren Abschnitts der Schwarzkörperkurve, der dem Bereich von Farborten des natürlichen Sonnenlichts entspricht und weist zusätzlich eine geringere Abweichung in den x- und y-Koordinaten von der Schwarzkörperkurve auf. Weißes Licht, dass durch eine solche Glaskeramik hindurchtritt, wird deswegen als besonders weiß und natürlich wahrgenommen.

Besonders bevorzugt ist die Glaskeramik dadurch gekennzeichnet, dass Licht der Normlichtart D65 nach Durchtritt durch die Glaskeramik bei 4 mm Dicke einen Farbort im Weißbereich W3 aufweist, der sich entlang der Schwarzkörperkurve im CIExyY-Farbraum von ca. 5.000 K bis ca.

20.000 K Farbtemperatur erstreckt und an der oberen Grenze um einen Wert von ca. y = 0,025 gegenüber der Schwarzkörperkurve nach oben und an der unteren Grenze um ca. y = 0,04 nach unten verschoben ist. Der Weißbereich W3 entspricht also im Wesentlichen dem Bereich W2, beginnt aber erst bei einer Farbtemperatur von 5.000 K. Dieser Farbbereich entspricht Tageslichtweiß und wird vom menschlichen Beobachter entsprechend als besonders reines Weiß, insbesondere als Kaltweiß, wahrgenommen:

| Weißbereich W3 | |
|---|---|
| x | y |
| 0,250 | 0,270 |
| 0,290 | 0,320 |
| 0,340 | 0,370 |
| 0,360 | 0,320 |
| 0,310 | 0,280 |
| 0,270 | 0,240 |

Eine solche Farbwirkung wird erreicht, indem die transparenten, eingefärbten LAS-Glaskeramiken 0,01 - 0,3 Gew.% $MoO_3$ als färbende Komponente enthalten. Ein Mindestgehalt von 0,01 Gew.% ist bei einer Färbung mittels $MoO_3$ erforderlich, um die verringerte Farbe, also Buntheit, zu erhalten. Wenn niedrigere Helligkeit gewünscht ist oder bei zunehmenden $Fe_2O_3$ oder $V_2O_5$- Gehalten sind höhere $MoO_3$- Gehalte erforderlich, da diese färbenden Komponenten die Farbkoordinaten vom Unbuntpunkt weg ins Gelbe bzw. ins Orangerote verlagern. Bevorzugt sind zur Einstellung des Farbortes in der Nähe des Unbuntpunktes mindestens 0,03 und besonders bevorzugt mindestens 0,05 Gew.% $MoO_3$ enthalten. Da in der Glaskeramik verschieden Wertigkeiten des Mo-Atoms vertreten sind, sind die angegebene Gehalte der Zusammensetzung analytisch auf diese Verbindung bezogen. Als Obergrenze beträgt der $MoO_3$- Gehalt 0,3, weiter bevorzugt 0,25 und besonders bevorzugt 0,2 Gew.%.

Es hat sich gezeigt, dass die Zugabe von $MoO_3$ eine Absenkung der Glasviskosität bewirkt und günstig ist für die Schmelzbarkeit des Glases. Allerdings wirken insbesondere die reduzierten Molybdänoxid-Spezies auch als Keimbildner und können die Entglasungsstabilität verschlechtern. Daher ist es vorteilhaft, den Gehalt zu begrenzen.

Die Glaskeramiken enthalten vorzugsweise weniger als 0,2 Gew.% $Nd_2O_3$, da bei diesem Farboxid die geringe Farbe über schmale Absorptionsbanden bei Wellenlängen von 526, 584 und 748 nm erreicht wird. Dies führt bei hohem Gehalt an $Nd_2O_3$ zu einem nicht flachen Transmissionsverlauf mit dem Nachteil, dass die Farbkoordinaten der Glaskeramik stärker von der verwendeten Normlichtart abweichen. Bei polychromatischen Anzeigen oder Bildschirmen werden die beschriebenen Wellenlängenbereiche beim Durchgang durch die Glaskeramik stark absorbiert. Der bevorzugte Gehalt an $Nd_2O_3$ beträgt weniger als 0,12 Gew.% und weiter bevorzugt weniger als 0,06 Gew.%. Besonders bevorzugt wird kein $Nd_2O_3$ eingesetzt und die Glaskeramik ist technisch frei von $Nd_2O_3$. An Verunreinigungen sind dann in der Regel weniger als 10 ppm enthalten. Dieser Effekt tritt unabhängig von der Zugabe anderer Färbemittel auf. Deshalb enthalten die Glaskeramiken unabhängig von anderen färbenden Bestandteilen vorzugsweise weniger als 0,2 Gew.% $Nd_2O_3$.

In einer bevorzugten Ausführungsform enthalten die Glaskeramiken deshalb 0,01 - 0,3 Gew.% $MoO_3$ als färbende Komponente und weniger als 0,2 Gew.% $Nd_2O_3$. Durch diese Kombination von $MoO_3$ und $Nd_2O_3$ können über einen weiten Helligkeitsbereich besonders farbneutrale Glaskeramiken erzielt werden.

Die in Transmission gemessene Buntheit c* im CIELAB-Farbsystem erfindungsgemäßer Glaskeramiken beträgt vorzugsweise höchstens 21, besonders bevorzugt höchstens 15 und insbesondere höchstens 7.

Bevorzugt sollen dabei die Farbkoordinaten a* = 0 $\pm$ 17, b* = 0 $\pm$ 17, weiter bevorzugt a* = 0 $\pm$ 12, b* = 0 $\pm$ 12, weiter bevorzugt a* = 0 $\pm$ 8, b* = 0 $\pm$ 8 und besonders bevorzugt a* = 0 $\pm$ 6, b* = 0 $\pm$ 6, betragen und damit wenig von der Unbuntachse abweichen.

Die beanspruchten Werte für die Farbkoordinaten beziehen sich auf 4 mm dicke, polierte Proben und Normlicht D65, 2°.

Mit Änderungen der Dicke verschieben sich die Farbkoordinaten einer Glaskeramik umso stärker je größer die auf 4 mm bezogene Buntheit c* ist. Bevorzugt ist eine Glaskeramik, bei der für den gesamten Dickenbereich von 2 bis 12 mm oder zumindest 2,5 bis 6 mm die erfindungsgemäßen Grenzen der Buntheit c* eingehalten werden.

Alternativ kann die geringe Farbe auch im CIExyY-Farbsystem dargestellt werden, bei dem gleich empfundene Farbkontraste um einen Farbort allerdings nicht auf einem Kreis, sondern auf den sogenannten MacAdams Ellipsen liegen. Die in Transmission gemessenen Farbkoordinaten der erfindungsgemäßen Glaskeramiken liegen für eine Dicke von 4 mm in der Nähe des Weiß- oder Unbuntpunktes im CIExyY-Farbsystem. Die bevorzugten Grenzen Δx = $\pm$ 0,13 und Δy = $\pm$ 0,10 sind eine gute Näherung.

Für Normlicht D65, 2° liegt der Farbort bei x = 0,3127 und y = 0,3290. Der Farbort von Normlicht D65, 2° wird auch als Weißpunkt bezeichnet. Daher liegen die Grenzen des Farborts bevorzugter Ausführungen der Glaskeramik bei 0,1827 ≤ x ≤ 0,4427 und 0,2290 ≤ y ≤ 0,4290. Farbkoordinaten, die noch näher am Weißpunkt liegen mit engeren Grenzen von Δx = $\pm$ 0,08 und Δy = $\pm$ 0,06 und weiter bevorzugt zwischen Δx = $\pm$ 0,05 und Δy = $\pm$ 0,04 sind vorteilhaft für eine farbechte Transmission von Licht durch die Glaskeramik. Bei solchen Glaskeramiken kommt es höchstens zu unwesentlichen Änderungen des Farborts von transmittiertem Licht.

Für andere Normlichtarten verschiebt sich die Lage des jeweiligen Weißpunktes und liegt z. B. für Normlicht C bei x = 0,309 und y = 0,319, für Normlicht A bei x = 0,448 und y = 0,407. Die Ober- und Untergrenzen für die vorzugsweise erreichbaren Farbkoordinaten sind je nach Beleuchtung mit den angegebenen Toleranzen anzupassen.

Der Abstand d des Farbortes (x,y) der Glaskeramik vom Weiß- oder Unbuntpunkt korreliert mit der Farbe und ist im Folgenden für verschiedene Ausführungsbeispiele angegeben. Für den Abstand d bei Messung mit Normlicht D65, 2° ergibt sich:

$$d = \sqrt{(x - 0,3127)^2 + (y - 0,3290)^2}$$

Die erfindungsgemäßen transparenten, eingefärbten Glaskeramiken haben geringe, visuell unauffällige Streuung bei der Durchsicht auf Gegenstände oder der Ansicht von unterhalb der Glaskeramik angeordneten, Licht aussendende Anzeigen oder Bildschirmen. Bei der Messung der Trübung sind sie bevorzugt gekennzeichnet durch einen Haze-Wert von weniger als 10 %, bevorzugt weniger als 6 %, weiter bevorzugt weniger als 4 % und besonders bevorzugt weniger als 2,5 %. Eine zusätzliche praxisnahe Messung des visuellen Erscheinungsbildes von leuchtenden Anzeigen ist für die praxisnahe Beurteilung der Glaskeramiken für die Anwendung als Kochfeld vorteilhaft.

Bevorzugt verfügen die erfindungsgemäßen transparenten, eingefärbten Lithiumaluminiumsilikat-Glaskeramiken über einen flachen Kurvenverlauf des spektralen Transmissionsgrades im Bereich des sichtbaren Lichtes von 470 bis 630 nm. In diesem Wellenlängenbereich ist die Empfindlichkeit des menschlichen Auges mit dem Maximum bei 555 nm höher und die Grenzwerte sind für die Wellenlängen blauer (470 nm) und roter LED Anzeigen (630 nm) charakteristisch. Der flache Transmissionsverlauf stellt die farblich gering bzw. unverfälschte Anzeige mit weißen LED, die polychromatisch sind, sicher. Weiter werden auch Displays, Bildschirme, z.B. TFT- Bildschirme, mit geringer Farbveränderung angezeigt. Die Durchsicht durch Glaskeramikartikel ist für die verschiedenen Verwendungen farblich wenig verändert und entspricht einem optischen Graufilter. Der flache Transmissionsverlauf hat den Vorteil, dass die Farbkoordinaten der Glaskeramik wenig von der Dicke des Artikels abhängen.

Der flache Verlauf der Transmissionskurve zeichnet sich bevorzugt aus durch ein Verhältnis des höchsten zum niedrigsten spektralen Transmissionsgrad im Wellenlängenbereich von 470 bis 630 nm von höchstens 2,5, bevorzugt höchstens 2, weiter bevorzugt höchstens 1,8.

Weiter soll der flache Transmissionsverlauf vorzugsweise keine schmalen Absorptionsbanden enthalten, wie z. B. für das $Nd_2O_3$ charakteristisch, bei denen sich die Transmissionswerte benachbarter Wellenlängen maßgeblich unterscheiden. In dem Wellenlängenbereich von 470 bis 680 nm sollen sich die spektralen Transmissionsgrade innerhalb von allen Bereichen die 50 nm umfassen bevorzugt um weniger als einen Faktor von 2,0, weiter bevorzugt weniger als 1,7 und besonders bevorzugt weniger als 1,5 unterscheiden.

Der Verlauf der Transmissionskurve im Infraroten und UV erfüllt bei den mit $MoO_3$ gefärbten erfindungsgemäßen Glaskeramiken die Anforderungen, die sich aus den Glaskeramik Anwendungen, basierend auf den etablierten anzeigefähigen mit Vanadiumoxid gefärbten Glaskeramiken, ergeben.

Im gesamten Wellenlängenbereich von 950 nm bis 2500 nm wird bevorzugt ein spektraler Transmissionsgrad von 25 % nicht unterschritten. Bevorzugt liegt die Transmission in diesem Bereich bei mindestens 30 % und besonders bevorzugt bei mindestens 40 % für 4 mm Dicke. In diesem Wellenlängenbereich werden zum Beispiel bei Kochflächen Infrarotsensoren zu Erfassung der Temperatur des Topfbodens verwendet.

Bei einer Wellenlänge von 1600 nm soll die Infrarot-Transmission, also der spektrale Transmissionsgrad bei 1600 nm, mehr als 40 % betragen.

Bevorzugt beträgt die Infrarot-Transmission 45-85 % bei 1600 nm und einer Dicke von 4 mm. Besonders bevorzugt hat die Infrarot-Transmission bei 1600 nm Werte von 50 - 80 %. Damit werden die Forderungen von strahlungsbeheizten Glaskeramik-Kochflächen an hohe Ankochgeschwindigkeit und Schutz vor unzulässiger Erwärmung der Umgebung der Kochfläche erfüllt.

Für Glaskeramik-Kaminscheiben ist die angegebene Durchlässigkeit von Infrarot-Strahlung gewünscht, um das Erlebnis des Kaminfeuers zu vertiefen.

Wie bei etablierten Vanadiumoxid-gefärbten Glaskeramiken ist im fernen IR ein Transmissionsfenster zwischen etwa 3 und 4,3 μm gewünscht, da auch hier bei Kochflächen IR-Sensoren eingesetzt werden. Im fernen Infrarot ist bei 3.700 nm eine Infrarot-Transmission von mindestens 30 bevorzugt, mindestens 40 % wie bei etablierten Glaskeramiken vorteilhaft.

Im Bereich des ultravioletten Lichtes sollen die erfindungsgemäßen Glaskeramiken ebenfalls einen dauerhaften Schutz gewährleisten. Das heißt, die Transmission bei Wellenlängen kleiner 300 nm sollen deutlich weniger als 0,1 % betragen.

Alle Angaben zur Transmission im IR und UV beziehen sich wieder auf 4 mm polierte Proben und Messung mit Normlicht D65, 2°.

Es hat sich gezeigt, dass auch die Einfärbung mit Molybdänoxid auf einem Redoxvorgang basiert. Im kristallisierbaren Ausgangsglas färbt das $MoO_3$ noch relativ schwach. Wie angenommen wird, findet der Redoxvorgang bei der Keramisierung statt, das Molybdän wird reduziert und der Redoxpartner, z. B. $Sn^{2+}$ wird zu $Sn^{4+}$ oxidiert. Die Untersuchungen haben gezeigt, dass für die Einfärbung mit Molybdän eine stärkere Redoxreaktion erforderlich ist als für die Einfärbung mit Vanadium. Deshalb wird das stärker reduzierende Läutermittel $SnO_2$ in Gehalten von 0,1 - <0,7 Gew.% verwendet. Niedrigere Gehalte sind für die Läuterung wenig wirksam, höhere Gehalte begünstigen eine unerwünschte Entglasung bei der Formgebung durch Sn-haltige Kristalle. Bevorzugt liegt der $SnO_2$-Gehalt unter 0,6 Gew.%. Die Einfärbung mit anderen Läutermitteln als Redoxpartner wie Antimon- oder Arsenoxid stellt sich als weniger effektiv dar.

Da es sich bei der Färbung durch Molybdänoxid um einen Redoxvorgang handelt, hat auch der Redoxzustand, der im Glas bei der Schmelze eingestellt wird, z.B. durch hohe Schmelztemperaturen und lange Verweilzeiten bei hohen Temperaturen oder Zusätze von reduzierenden Komponenten einen Einfluss. Einen weiteren Einfluss auf die Farbwirkung haben die Keramisierungsbedingungen. Insbesondere führen hohe Keramisierungstemperaturen und längere Keramisierungszeiten zu einer stärkeren Einfärbung. Zusätze von anderen polyvalenten Komponenten wie $Fe_2O_3$, $MnO_2$, $V_2O_5$, $CeO_2$, $TiO_2$ können neben ihrer eigenen Farbwirkung den Redoxvorgang beeinflussen und so die Molybdänoxid-Einfärbung hinsichtlich Helligkeit und Farbkoordinaten der Glaskeramik beeinflussen.

Die Komponenten $Fe_2O_3$ und $MnO_2$ verringern die Färbung durch $MoO_3$ und verschieben den Farbort im CIELAB-Farbsystem zu höheren b*-Werten, also ins Gelbe. Höhere Gehalte als 0,25 Gew.% $Fe_2O_3$ sind daher ungünstig. Bevorzugt beträgt der $Fe_2O_3$-Gehalt maximal 0,15 Gew.% und besonders bevorzugt maximal 0,1 Gew.%. Wegen der hohen Kosten eisenarmer Rohstoffe ist es unwirtschaftlich, den $Fe_2O_3$-Gehalt auf Werte unter 0,005 Gew.% zu verringern. Eine bevorzugte Untergrenze ist ein Gehalt von größer als 0,03 Gew.% und besonders bevorzugt größer als 0,05 Gew.%. Der $MnO_2$-Gehalt ist bevorzugt kleiner als 0,05 Gew.% und besonders bevorzug kleiner als 0,03 Gew.%.

Die Komponente $V_2O_5$ verschiebt den Farbort ins Orangerote, also zu höheren a*, b*-Werten und im CIE-Farbsystem zu höheren x- Werten. Die Komponente eignet sich für eine Kombinationsfärbung mit $MoO_3$. Allerdings färbt $V_2O_5$ stärker, so dass der Gehalt begrenzt werden muss, um eine möglichste geringe Buntheit c* zu erreichen. Höhere Gehalte als 0,02 Gew.% sind daher ungünstig. Bevorzugt beträgt der $V_2O_5$-Gehalt weniger als 0,015 Gew.% und weiter bevorzugt maximal 0,01 Gew.%. Besonders bevorzugt wird kein $V_2O_5$ der Zusammensetzung beigegeben und es liegen nur Verunreinigungen von wenigen, meist 1-15, ppm in der Glaskeramik vor. Das Molybdänoxid ist also das Hauptfärbemittel und es gilt die Komponentenbeziehung (in Gew.%) $MoO_3$/ $V_2O_5$ > 1, bevorzugt > 3, weiter bevorzugt > 5 und besonders bevorzugt > 10.

$TiO_2$ ist als Komponente ist für die Keimbildung vorteilhaft. Da auch die Färbung durch das Molybdänoxid unterstützt wird, d.h. die Zugabe zu niedrigeren Werten der Lichttransmission Y führt, ist ein Mindestgehalt von größer als 1,6 Gew.% bevorzugt. Bevorzugt ist ein Mindestgehalt von 2,5, weiter bevorzugt von 3,0 und besonders bevorzugt von 3,5 Gew.%.

$TiO_2$ ist also vorzugsweise der wichtigste Keimbildner und es gilt die Komponenten-beziehung (in Gew.%) $TiO_2$/ $ZrO_2$ > 1, bevorzugt > 2, weiter bevorzugt > 3.

Neben den genannten polyvalenten färbenden Komponenten $Fe_2O_3$ und $V_2O_5$ können auch weitere färbende Komponenten wie z.B. Chrom-, Mangan-, Kobalt-, Nickel-, Kupfer-, Tantal-, Niob-, Cer-, Wolfram-, Wismut-, Selen-, Selten Erd-, Sulfid- Verbindungen eingesetzt werden, um die Farbkoordinaten der Glaskeramik einzustellen. Eine Besonderheit nehmen dabei polyvalente Elemente ein, da sie zusätzlich den Redoxvorgang, der zur Einfärbung des Molybdäns führt, beeinflussen können. Der Gehalt färbender Komponenten ist bevorzugt auf Mengen von maximal 2 Gew.%, weiter bevorzugt unter 1 Gew.% begrenzt. Außerdem können diese Verbindungen die Transmission im Infrarot absenken und sollten deshalb vorzugsweise begrenzt sein. Die Figur 1(a) zeigt schematisch die Richtung der Verschiebungen des Farbortes einer mit $MoO_3$ eingefärbten Glaskeramik bei Zusatz ausgewählter färbender Komponenten im CIE-Farbsystem.

Der Gehalt an $Cr_2O_3$ beträgt bevorzugt weniger als 0,02 Gew%, besonders bevorzugt weniger als 0,01 Gew% und insbesondere ist die Glaskeramik bis auf unvermeidbare Verunreinigungen frei von $Cr_2O_3$.

Die Oxide $Li_2O$, $Al_2O_3$ und $SiO_2$ sind in den angegebenen Grenzen notwendige Bestandteile der Hochquarz- und/oder Keatit-Mischkristallphasen.

Der Gehalt an $Li_2O$ beträgt 3 bis 5 Gew.%. Der Mindestgehalt ist für die Bildung der Kristalle mit niedriger thermischer Ausdehnung erforderlich, doch führen höhere Gehalte als 5 Gew.% im Herstellprozess häufig zu einer ungewollten Entglasung. Bevorzugt ist der $Li_2O$-Gehalt größer, weil die Komponente die Färbung mit $MoO_3$ verstärkt. Ein Gehalt von 3 bis 5 Gew.% führt zu besonders guten Ergebnissen.

Der ausgewählte Gehalt an $Al_2O_3$ beträgt 18-25 Gew.%. Höhere Gehalte sind nachteilig wegen der Neigung zu Entglasung von Mullit bei der Formgebung.

Der $SiO_2$-Gehalt beträgt maximal 70 Gew.%, weil diese Komponente die Viskosität des Glases stark erhöht. Bevorzugt wird diese Komponente weiter auf Werte von maximal 69 Gew.% begrenzt. Für gutes Einschmelzen der Gläser und für niedrige Formgebungstemperaturen sind höhere Gehalte von $SiO_2$ unwirtschaftlich. Der Mindestgehalt

an $SiO_2$ beträgt 60 Gew.%, weil dies für die geforderten Anwendungseigenschaften, wie z.B. chemische Beständigkeit und Temperaturbelastbarkeit vorteilhaft ist. Darüber hinaus wird die Streuung bei kurzen Keramisierungszeiten verringert.

Der Begriff "im Wesentlichen besteht aus" bedeutet, dass die aufgeführten Komponenten wenigstens 96 % in der Regel wenigstens 98 % der Gesamtzusammensetzung betragen sollen.

Die Zugabe der Alkalien $Na_2O$, $K_2O$ und der Erdalkalien CaO, SrO, BaO sowie von $B_2O_3$ verbessern die Schmelzbarkeit und die Entglasungsstabilität bei der Formgebung des Glases. Da diese Komponenten nicht in die Kristallphase eingebaut werden, sondern im Wesentlichen in der Restglasphase der Glaskeramik verbleiben, müssen ihre Gehalte begrenzt werden. Zu hohe Gehalte erhöhen die thermische Ausdehnung der Glaskeramik in unzulässiger Weise und beeinträchtigen das Kristallisationsverhalten bei der Umwandlung des kristallisierbaren Ausgangsglases in die Glaskeramik, hier insbesondere zu Lasten kurzer Keramisierungszeiten. Außerdem wirken sich höhere Gehalte ungünstig auf die Zeit-/Temperaturbelastbarkeit der Glaskeramik aus. Die Summe der Alkalien $Na_2O + K_2O$ beträgt mindestens 0,1, bevorzugt mindestens 0,2 Gew.%. Die Obergrenze beträgt weniger als 4 Gew.%, bevorzugt weniger als 3 Gew.%.

Die Summe der Erdalkalien CaO + SrO + BaO beträgt maximal 5 Gew.%, bevorzugt maximal 4 Gew.%. Eine Mindestsumme von 0,2 Gew.% ist bevorzugt.

Die genannten Alkalien, $B_2O_3$ und Erdalkalien reichern sich außer in der Restglasphase zwischen den Kristallen auch an der Oberfläche der Glaskeramik an. Beim Keramisieren bildet sich eine ca. 200 bis 1000 nm dicke glasige Oberflächenschicht, die nahezu frei ist von Kristallen und die an diesen Elementen angereichert und an Lithium abgereichert ist. Diese glasige Oberflächenschicht wirkt sich günstig auf die chemische Beständigkeit der Glaskeramik aus.

Die optionale Zugabe von $B_2O_3$ erhöht die Entglasungsfestigkeit. Höhere Gehalte als 3 Gew.% sind ungünstig, da sie die Streuung der Glaskeramik erhöhen. Bevorzugt sind maximal 2 Gew.% $B_2O_3$ enthalten.

Als weitere Komponenten können MgO, ZnO und $P_2O_5$ in die Hochquarz-Mischkristalle eingebaut werden. Der ZnO-Gehalt ist wegen der Problematik der Bildung unerwünschter Kristallphasen wie Zink-Spinell (Gahnit) bei der Keramisierung auf Werte von höchstens 4 Gew.%, bevorzugt höchstens 3 Gew.% begrenzt. Der MgO-Gehalt ist auf maximal 3 Gew.%, bevorzugt bis zu 1,5 Gew.% begrenzt, weil er sonst den Ausdehnungskoeffizienten der Glaskeramik unzulässig erhöht. Die Zugabe an $P_2O_5$ kann bis zu 5 Gew.% betragen und ist bevorzugt auf 3 % begrenzt. Die Zugabe von $P_2O_5$ ist günstig für die Entglasungsfestigkeit. Höhere Gehalte wirken sich ungünstig auf die Säurebeständigkeit und kurze Keramisierungszeiten aus.

$TiO_2$, $ZrO_2$ und $SnO_2$ sind in dieser Ausführungsform als Keimbildner vorgesehen. Die Gesamtsumme soll 3 bis 6,5 Gew.% betragen. Die Mindestmenge ist hier erforderlich, damit sich bei der Keimbildung Keimkristalle in hoher Dichte bilden, auf denen die Hochquarz-Mischkristalle in hoher Anzahl verknüpft mit kleinen Kristallitgrößen aufwachsen. Höhere Gehalte als in der Summe 6,5 Gew.% verschlechtern die Entglasungsfestigkeit bei der Formgebung. Dies gilt besonders für die Komponente $SnO_2$, die auf Werte von kleiner 0,7 Gew.% begrenzt ist und die Komponente $ZrO_2$,die auf 2,5 Gew.% begrenzt ist. Die Komponente $TiO_2$ ist ein sehr wirksamer und für kurze Keramisierungszeiten wichtiger Bestandteil. Der $TiO_2$-Gehalt beträgt mindestens 1,5 Gew.% und höchstens 5,5 Gew.%. Höhere Gehalte als 5,5 Gew.% sind für die Entglasungsfestigkeit nachteilig und können in der Glaskeramik unerwünschte Ti-haltige Kristallphasen, wie z. B. Rutil induzieren.

Für eine wirtschaftliche Herstellung soll das kristallisierbare Ausgangsglas gut schmelzbar und läuterbar sein, über eine hohe Entglasungsfestigkeit verfügen und in kurzen Zeiten keramisierbar sein. Um die Viskosität der Glasschmelze abzusenken hat es sich als vorteilhaft erwiesen, den maximalen Gehalt an $SiO_2$, $Al_2O_3$, $ZrO_2$ weiter zu begrenzen, während die Mindestgehalte an Alkalien $Na_2O + K_2O$, Erdalkalien CaO + SrO + BaO bei höheren Werten gewählt werden können.

Um die Forderungen an kurze Keramisierungszeiten und gute Entglasungsfestigkeit weiter zu optimieren sind die Gehalte der Keimbildner einzugrenzen sowie die maximalen Gehalte an $Na_2O+K_2O$, $B_2O_3$, CaO + SrO + BaO und $P_2O_5$ einzugrenzen.

Bevorzugt besitzt die Lithiumaluminiumsilikat-Glaskeramik, bzw. der daraus hergestellte Artikel, diesbezüglich eine Zusammensetzung, die in Gew.% auf Oxidbasis im Wesentlichen besteht aus:

| | |
|---|---|
| $Li_2O$ | 3 - 5 |
| $\Sigma$ $Na_2O + K_2O$ | 0,2 - <3 |
| MgO | 0 - 1,5 |
| $\Sigma$ CaO + SrO + BaO | 0,2 - 4 |
| ZnO | 0-3 |
| $B_2O_3$ | 0 - 2 |
| $Al_2O_3$ | 18 - 24 |
| $SiO_2$ | 60 - 69 |
| $TiO_2$ | 1,5 - 5,5 |

(fortgesetzt)

| | |
|---|---|
| $ZrO_2$ | 0 - 2,5 |
| $SnO_2$ | 0,1 - <0,7 |
| $\Sigma\ TiO_2 + ZrO_2 + SnO_2$ | 3,5 - 6,3 |
| $P_2O_5$ | 0 - 3 |
| $MoO_3$ | 0,01 - 0,25 |
| $Fe_2O_3$ | >0,03 - 0,15 |
| $V_2O_5$ | 0 - <0,01 |

Besonders bevorzugt ist $ZrO_2$ an der Keimbildung beteiligt und der $ZrO_2$-Gehalt beträgt 0,3 - <2,2 Gew.%. Dies ist für die Anforderungen, die an die Verwendung der Glaskeramiken gestellt werden, so zum Beispiel die chemische Beständigkeit, vorteilhaft.

Die erfindungsgemäßen Glaskeramiken enthalten optional Zusätze chemischer Läutermittel wie $As_2O_3$, $Sb_2O_3$, $CeO_2$ und von Läuterzusätzen wie Manganoxid, Sulfat-, Halogenid-Verbindungen (F, Cl, Br) in Gesamtgehalten bis zu 2,0 Gew.%.

Bevorzugt sind die Glaskeramiken technisch frei von den unter Umweltgesichtspunkten kritischen Läutermitteln Arsen- und Antimonoxid. Das heißt die Glaskeramiken enthalten diese Komponenten nur als Rohstoffverunreinigungen. Als Verunreinigung liegen beide Komponenten jeweils in Gehalten von weniger als 1000 ppm, bevorzugt in Gehalten von weniger als 500 ppm vor.

Bevorzugt wird auch auf den Zusatz von Halogenidverbindungen als Läuterhilfsmittel verzichtet. Diese bilden bei der Schmelze und Formgebung korrosive Verbindungen wie HF, HCl und HBr, die für die Lebensdauer der Aggregate nachteilig sind. Die Gläser und Glaskeramiken sind daher bis auf unvermeidliche Spuren frei von F, Cl, Br, und deren einzelne Gehalte betragen weniger als 500 ppm.

Verbindungen einer Vielzahl von Elementen wie z. B. F, Cl, den Alkalien Rb, Cs oder Elementen wie Mn, Hf sind bei den großtechnisch verwendeten Gemengerohstoffen übliche Verunreinigungen. Andere Verbindungen wie z.B. solche der Elemente W, Nb, Ta, Y, Seltene Erden, Bi, V, Cr, Ni können in geringen Anteilen, typischerweise im ppm-Bereich, enthalten sein.

Der Wassergehalt der kristallisierbaren Gläser zur Herstellung der Glaskeramiken liegt abhängig von der Wahl der Gemengerohstoffe und den Prozessbedingungen bei der Schmelze vorzugsweise zwischen 0,015 und 0,06 mol/l. Dies entspricht $\beta$-OH-Werten von 0,16 bis 0,64 $mm^{-1}$. Bei der Umwandlung in die Glaskeramik ändert sich die IR-Bande, die zur Bestimmung des Wassergehaltes herangezogen wird. Dadurch erhöht sich messbedingt der $\beta$-OH-Wert für die Glaskeramik um einen Faktor von ca. 1,6, ohne dass sich dabei der Wassergehalt ändert. Dies und die Methode zur Bestimmung der $\beta$-OH-Werte ist z. B. in der EP 1074520 A1 beschrieben.

Die erfindungsgemäßen Zusammensetzungen erlauben günstige Fertigungseigenschaften für eine wirtschaftliche Herstellung, wie kostengünstige Gemengerohstoffe, niedrige Schmelz- und Formgebungstemperaturen, gute Entglasungsfestigkeit und kurze Keramisierungszeiten.

Niedrige Schmelz- und Formgebungstemperaturen werden durch niedrigere Viskosität der Glasschmelze bei hohen Temperaturen sichergestellt. Hierfür sind die Temperatur, bei der die Viskosität der Glasschmelze $10^2$ dPas beträgt, und die Verarbeitungstemperatur $V_A$, bei der die Viskosität der Glasschmelze $10^4$ dPas beträgt charakteristische Größen. Die $10^2$-Temperatur liegt für die erfindungsgemäßen kristallisierbaren Gläser vorzugsweise bei weniger als 1775 °C, bevorzugt weniger als 1760 °C und die Verarbeitungstemperatur vorzugsweise unter 1335°C, bevorzugt unter 1325 °C. Da eine niedrige Glasviskosität auch den Aufstieg von Blasen und damit die Läuterung begünstigt, ist eine niedrige Glasviskosität auch vorteilhaft für die Blasenqualität.

Das kristallisierbare Glas verfügt bei der Formgebung aus der Schmelze über eine ausreichende Entglasungsfestigkeit. Bei der Formgebung im Kontakt mit dem Formgebungsmaterial (z. B. Edelmetall bei der Ziehdüse im Walzprozess) bilden sich im Glas keine für die Festigkeit der Glaskeramik kritischen und visuell auffälligen Kristalle. Die Grenztemperatur, unterhalb der es zu kritischen Entglasungen kommt, d.h. die obere Entglasungsgrenze (OEG), liegt vorzugsweise unter der Verarbeitungstemperatur $V_A$ und bevorzugt 10°C darunter. Bei dieser Mindestdifferenz wird für den Formgebungsprozess ein ausreichendes Prozessfenster definiert. Besonders vorteilhaft ist ein Prozessfenster $V_A$-OEG, das mindestens 20 °C beträgt. Die Differenz $V_A$-OEG ist also ein Maß für die Entglasungsfestigkeit.

Die kristallisierbaren Gläser werden durch den weiter unten beschriebenen mehrstufigen Temperaturprozess in die Glaskeramiken umgewandelt.

In einer ersten Ausführungsform ist die Glaskeramik transparent eingefärbt und enthält Hochquarz-Mischkristalle als Hauptkristallphase.

Für die Minimierung der Streuung ist es vorteilhaft, die Kristallitgrößen zu minimieren. Eine wegen zunehmender Streuung bevorzugte Obergrenze ist eine mittlere Kristallitgröße kleiner als 70 nm, bevorzugt kleiner als 60 nm.

Der Kristallphasenanteil der Hochquarz-Mischkristalle der Glaskeramik beträgt vorzugsweise wenigstens 50 Gew.% und vorzugsweise höchstens 80 Gew.%. Dieser Bereich ist vorteilhaft, um die gewünschten mechanischen und thermischen Eigenschaften der Glaskeramik zu erhalten. Besonders ist ein Anteil von 55-75 Gew.% bevorzugt.

Die thermische Ausdehnung der Glaskeramik wird üblicherweise im Temperaturbereich der für die Verwendung wichtig ist, also zum Beispiel bei Kochflächen zwischen Raumtemperatur und ca. 700 °C, auf Werte um $0 \pm 1 \cdot 10^{-6}$/K eingestellt. Bevorzugt weicht die mittlere Ausdehnung im Bereich der Anwendungstemperaturen höchstens $\pm 0,5 \cdot 10^{-6}$/K von der Nullausdehnung ab.

In einer anderen Ausführungsform enthält die transparente eingefärbte Glaskeramik Keatit-Mischkristalle als Hauptkristallphase. Die mittlere Kristallitgröße ist bevorzugt kleiner als 150 nm, damit die Streuung die zulässigen Haze-Werte nicht überschreitet. Der Kristallphasenanteil beträgt bevorzugt mehr als 55 Gew.%.

Die Glaskeramiken können beide Kristallarten enthalten. Durch die unterschiedlichen Eigenschaftskombinationen der Glaskeramik-Ausführungen wird abhängig von den enthaltenen Kristallphasen eine Vielzahl von Anwendungen technisch und wirtschaftlich vorteilhaft bedient.

Aus wirtschaftlichen Gründen ist es vorteilhaft, wenn aus der gleichen Zusammensetzung des kristallisierbaren Lithiumaluminiumsilikat-Glases sowohl transparente, eingefärbte Glaskeramiken mit Hochquarz-Mischkristallen als Hauptkristallphase als auch Glaskeramiken mit Keatit-Mischkristallen als Hauptkristallphase hergestellt werden können.

Die bevorzugte Geometrie für die erfindungsgemäßen Glaskeramiken bzw. die daraus hergestellten Artikel ist in Form von Platten. Die Platte weist vorzugsweise eine Dicke von 2 mm bis 20 mm auf, weil sich damit wichtige Anwendungen erschließen. Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher bevorzugt bei höchstens 6 mm gewählt.

Geeignete Formgebungsverfahren für die plattenförmige Geometrie sind insbesondere Walzen und Floaten. Bevorzugtes Formgebungsverfahren aus der Glasschmelze ist das über zwei Walzen, da dieses Verfahren wegen der schnelleren Abkühlung Vorteile hinsichtlich der Entglasung hat.

Die Glaskeramikplatte und die vorzugsweise daraus hergestellten Artikel können dabei nicht nur eben ausgeformt sein, sondern auch dreidimensional verformt sein. Beispielsweise können abgekantete, gewinkelte oder gewölbte Platten verwendet werden. Die Platten können rechtwinklig oder in anderen Formen vorliegen sowie neben ebenen Bereichen dreidimensional verformte Bereiche wie z.B. Woks oder eingewalzte Stege oder Flächen als Erhebungen bzw. Vertiefungen enthalten. Die geometrischen Verformungen der Platten werden bei der Heißformgebung, z. B. durch strukturierte Formgebungswalzen, oder durch nachgelagerte Heißformgebung an den Ausgangsgläsern, zum Beispiel durch Brenner, Infrarotstrahler oder durch Schwerkraftsenken, vorgenommen. Durch Bohren oder Schleifen und ggf. anschließendem Polieren können auch Geometrien wie Bohrungen oder Facetten angebracht werden. Beim Keramisieren wird mit unterstützenden keramischen Formen, z. B. ebenen Unterlagen gearbeitet, um unkontrollierte Änderungen der geometrischen Form zu vermeiden. Eine nachträgliche Politur einer oder beider Seiten ist optional möglich wenn es die Anwendung erfordert.

Das erfindungsgemäße Verfahren zur Herstellung einer erfindungsgemäßen Glaskeramik, ist dadurch gekennzeichnet, dass die Temperatur der Glasschmelze mindestens 1600 °C erreicht. Die minimale Temperatur der Glasschmelze von 1600 °C ist erforderlich, um einen ausreichenden reduzierten Zustand des Ausgangsglases für die Keramisierung einzustellen. Dies ist erforderlich, damit ausreichende Konzentrationen von polyvalenten Komponenten in der niedrigeren Wertigkeitsstufe vorliegen, so zum Beispiel $As^{3+}$, $Sn^{2+}$, $Ti^{3+}$, die befähigt sind, das Molybdän bei der Keramisierung in den färbenden reduzierten Zustand zu überführen, wobei sie als Redoxpartner aufoxidiert werden. Bei sehr reduziert eingestellter Glasschmelze kann bereits ein Teil des Molybdäns reduziert werden und die Gläser einfärben, in der Regel sind die kristallisierbaren Ausgangsgläser noch weitgehend ungefärbt. Bevorzugt beträgt die Schmelztemperatur wenigstens 1640 °C.

Der Mechanismus der Einstellung des reduzierten Zustandes bei hohen Temperaturen ist dabei der, dass $O_2$-Läuterblasen gebildet werden, die in der Glasschmelze aufsteigen und diese verlassen, wobei diese reduziert wird.

Wie in der Schrift WO 2010102859 A1 aufgezeigt, kann der Redoxzustand des kristallisierbaren Ausgangsglases durch Messung des Sauerstoffpartialdrucks des Glases als Funktion der Temperatur $pO_2(T)$ bestimmt werden.

Es hat sich gezeigt, dass ein gezielt eingestellter Redoxzustand des kristallisierbaren Ausgangsglases, der bei der Schmelze vorgenommen wird, eine günstige Wirkung auf den gewünschten Transmissionsverlauf der Glaskeramik hat. Dies verstärkt die Farbwirkung des Molybdänoxids und es werden für gleiche Einfärbung geringere Gehalte benötigt, was wirtschaftlich vorteilhaft ist.

Bei einem bei der Schmelze zu reduziert eingestellten kristallisierbaren Glas befinden sich größere Anteile von Molybdän in einer niedrigen Wertigkeit und führen bereits im Glas zu einer unkontrollierbaren Keimbildung und Kristallisation. Meist sind dies Hochquarz-Mischkristallphasen. Bei dem erfindungsgemäßen Verfahren wird also das Glas nur soweit reduziert, dass noch keine unerwünschte Kristallisation im kristallisierbaren Glas auftritt.

Folgende Verfahrensparameter sind geeignet, das Glas zu reduzieren:

- der Zusatz von Reduktionsmitteln in pulvriger und/oder flüssiger Form zum Ausgangsgemenge. Dafür eignen sich Metalle, Kohlenstoff und/oder aufoxidierbare Kohlenstoff- bzw. Metallverbindungen wie z.B. Al- oder Si-Pulver, Zucker, Holzkohle, Ruß, SiC, TiC, MgS, ZnS,
- auch gasförmige Reduktionsmittel, wie z.B. Formiergas sind geeignet,
- die Verringerung des Zusatzes von Nitratverbindungen im Gemenge,
- die Erhöhung des Scherbenanteils im Gemengesatz,
- hohe Schmelz- und Läutertemperaturen und die Verweilzeit der Schmelze bei hohen Temperaturen.

Weiterhin ist das erfindungsgemäße Verfahren zur Herstellung der Glaskeramiken gekennzeichnet durch die Schritte:

a) Bereitstellen eines Gemengesatzes aus technischen Rohstoffen enthaltend 20 bis 80 Gew.% Scherben;
b) Schmelze des Gemengesatzes und Läutern bei Temperaturen, die mindestens 1600 °C erreichen;
c) Einstellung eines reduzierten Zustandes im Glas, bei dem keine Kristalle im abgekühlten Glas gebildet werden.
d) Abkühlen der Glasschmelze und Formgebung bei Temperaturen in der Nähe der Verarbeitungstemperatur $V_A$, wobei die gewünschte Form des Artikels erzeugt wird;
e) Kühlen in einem Entspannungsofen auf Raumtemperatur, wobei unerwünschte Spannungen im Glas entfernt werden.

Der Gemengesatz ist so ausgebildet, dass nach der Schmelze ein Glas mit der erfindungsgemäßen Zusammensetzung und Eigenschaften entsteht. Durch den Scherbenzusatz von 20 bis 80 Gew.% wird das Einschmelzen begünstigt, und es lassen sich höhere Wannendurchsätze erhalten. Es kann in konventionellen Schmelzwannen bei maximalen Temperaturen der Glasschmelze von weniger als 1750 °C, oder mit einem zusätzlichen Hochtemperatur-Läuteraggregat bei höheren maximalen Temperaturen geläutert werden.

Bei der Formgebung werden die etablierten Glastechnologien, wie Gießen, Pressen, Walzen und Floaten bevorzugt. Artikel mit plattenförmiger Geometrie werden über Walzen oder Floaten hergestellt und zur Vermeidung von Spannungen in einem Kühlofen auf Raumtemperatur abgekühlt. Aus diesem Glasband werden nach Sicherstellung der Qualität hinsichtlich von Volumen- und Oberflächendefekten Platten der gewünschten Größe hergestellt.

Der nächste Prozessschritt ist die Umwandlung des kristallisierbaren Glases in die erfindungsgemäße Glaskeramik. Diese Keramisierung wird auf ebenen oder dreidimensionalen, meist keramischen Unterlagen, durchgeführt, um unkontrollierte Änderungen der geometrischen Form zu vermeiden. Eine nachträgliche Politur einer oder beider Seiten ist optional möglich wenn es die Anwendung erfordert. Bei dem erfindungsgemäßen Verfahren zur Keramisierung wird das thermisch entspannte kristallisierbare Ausgangsglas bei maximalen Temperaturen von 1050 °C in die Glaskeramik umgewandelt. Bevorzugt beträgt die maximale Temperatur weniger als 980 °C. Niedrige maximale Kristallisationstemperaturen sind für niedrige Werte der mittleren Kristallgrößen und damit verbunden geringe Streuung vorteilhaft.

In einer weiteren Ausgestaltung des Keramisierungsverfahrens sind aus wirtschaftlichen Gründen kurze Keramisierungszeiten von weniger als 300 Minuten, bevorzugt weniger als 200 Minuten und besonders bevorzugt weniger als 120 Minuten bevorzugt.

Weiter bevorzugt wird das kristallisierbare Glas in einem Rollenofen keramisiert. Bei dieser Keramisierung wird das thermisch entspannte kristallisierbare Ausgangsglas innerhalb von 3 min bis 60 min auf den Temperaturbereich von etwa 680 °C erhitzt. Die erforderlichen hohen Heizraten können großtechnisch in Rollenöfen realisiert werden. Dieser Temperaturbereich von etwa 680 °C entspricht in etwa der Transformationstemperatur des Glases. Oberhalb dieser Temperatur bis etwa 800 °C ist der Bereich mit hohen Keimbildungsraten. Der Temperaturbereich der Keimbildung wird über einen Zeitraum von 10 Minuten bis 100 Minuten durchfahren. Danach wird die Temperatur des Kristallisationskeime enthaltenden Glases innerhalb von 5 Minuten bis 80 Minuten auf eine Temperatur von 850 °C bis 980 °C, die sich durch hohe Kristallwachstumsgeschwindigkeiten der Kristallphasen auszeichnet, erhöht. Bei der Herstellung von Glaskeramiken mit Hochquarz-Mischkristallen als Hauptkristallphase ist die Temperatur auf maximal 970 °C begrenzt. Diese maximale Temperatur wird bis zu 60 Minuten gehalten.

Dabei wird das Gefüge der Glaskeramik homogenisiert und die optischen, physikalischen und chemischen Eigenschaften eingestellt. Die erhaltene Glaskeramik wird in insgesamt weniger als 150 Minuten auf Raumtemperatur abgekühlt. Bevorzugt wird die Abkühlung bis ca. 700 °C mit langsamerer Rate durchgeführt.

Durch die Wahl der Zusammensetzung mit $MoO_3$ zur Einfärbung, über die Einstellung des Redoxzustandes des kristallisierbaren Glases und durch die Herstellparameter bei der Schmelze und Keramisierung ist mit den erfindungsgemäßen transparenten eingefärbten Glaskeramiken ein weiter Bereich der Helligkeit Y darstellbar, der je nach Verwendung bei 4 mm Dicke bevorzugt Werte von 0,1 bis 80 % besitzt (Normlicht D65, 2°).

Als untere Grenze ist eine Helligkeit von mindestens 0,3 %, bevorzugt mindestens 0,8 % und weiter bevorzugt mindestens 1,2 % vorteilhaft. Diese Werte führen zu einem dunklen schwarzen Aussehen und verhindern die Durchsicht durch die Glaskeramik. Die obere Grenze hängt von der Verwendung ab und beträgt alternativ höchstens 70, höchstens 50 oder höchstens 45 %. Bei diesen Werten ist die graue Einfärbung mit geringer Unbuntheit deutlich wahrnehmbar.

Vorzugsweise findet die transparente eingefärbte Lithiumaluminiumsilikat-Glaskeramik in plattenförmiger Geometrie Verwendung als Kaminsichtscheibe, Koch-, Grill- oder Bratfläche, in Brandschutzverglasungen, Backofensichtscheibe (insbesondere für Pyrolyseherde), Abdeckung im Beleuchtungssektor, als Sicherheitsglas optional im Laminatverbund, als Trägerplatte oder Ofenauskleidung in thermischen Prozessen

Bei Kaminsichtscheiben wird eine gute farbneutrale Durchsicht auf den Brennraum und die Flammen gewünscht. Die Helligkeit liegt für konstruktive Dicken von 2,5 bis 6 mm bevorzugt bei Werten von 1-80%, insbesondere bei Werten von 5-80%. Der für die Anwendung gewünschte Wert der Helligkeit wird dabei für die vorliegende konstruktive Dicke eingestellt. Gegenüber transparenten Glaskeramikscheiben mit höheren Helligkeiten ist der Brennraum bei erloschener Flamme weniger einsehbar und die Rückstände des Brenngutes werden verdeckt. Für die Verringerung der Einsehbarkeit beträgt die Obergrenze der Helligkeit vorzugsweise 50, bevorzugt 35 und weiter bevorzugt 25 %. Für die Sichtbarkeit der Flamme ist eine Untergrenze von vorzugsweise 8, bevorzugt 10 und weiter bevorzugt 12 % vorteilhaft. Ein weiter bevorzugter Bereich der Helligkeit beträgt 8-25 %.

Andere Sichtscheiben, beispielsweise für Brandschutzverglasungen, Backofen, Beleuchtung oder Sicherheitsglas liegen mit der Helligkeit für konstruktive Dicken von 2,5 bis 6 mm bevorzugt in dem Bereich von 0,1-80% und profitieren von der geringen Farbe, bzw. Buntheit und damit grauen Durchsicht. Für den Einsatz der Glaskeramikplatte als Komponente in einer Brandschutzverglasung ist die geringe Farbe vorteilhaft für die Integration in Glasfronten, bei denen auch Scheiben aus üblichem Kalknatronglas verbaut sind.

Bei dunkel eingefärbten Kochflächen beträgt die Helligkeit der Glaskeramikplatte für konstruktive Dicken zwischen 2,5 bis 6 mm bevorzugt 1,2-5 %, um eine schwarzes Erscheinungsbild zu erreichen und um die störende Durchsicht auf technische Bauelemente unter der Kochfläche zu verhindern. Der für die Anwendung gewünschte Wert der Helligkeit wird dabei für die vorliegende konstruktive Dicke eingestellt. Der Wertebereich sichert die Anzeigefähigkeit, meist mit Leuchtdioden, und vermeidet die Blendwirkung durch strahlende Heizkörper. Bei diesen Kochflächen wird unter Ausnutzung der erfindungsgemäßen geringen Buntheit bevorzugt auf die Verwendung von technischen Maßnahmen, wie Farbfiltern oder -schichten zur Farbkorrektur des durchgestrahlten Lichtes verzichtet.

Bei Kochflächen in einer alternativen Ausführung mit höheren Werten der Helligkeit beginnend ab etwa 2 bis zu maximal 80 % für konstruktive Dicken zwischen 2,5 und 6 mm wird in der Regel zusätzlich eine Maskierung, meist als blickdichte Ober- und/oder Unterseitenbeschichtung ausgeführt, aufgebracht, um den Einblick in die technischen Einbauten unter der Kochfläche zu verhindern. Der untere Grenzwert hängt ab von dem Aufbau des Kochfeldes und der Beleuchtung. Von der Beschichtung ausgesparte Bereiche sind für das Anbringen von Sensorbereichen, farbigen und weißen Anzeigenvorrichtungen, Kochzonenmarkierungen sowie Displays und Bildschirme vorgesehen.

Es ist möglich, Beschichtungen auf Ober- und Unterseite der transparenten eingefärbten Glaskeramikplatte zu kombinieren und dabei auch teiltransparente Schichten einzubeziehen. Ebenso können Markierungen, z. B. für Kochzonen, aufgebracht werden. Dabei sind die bekannten verschiedenen Arten von Beschichtungen wie z. B. mit organischen oder anorganischen Dekorfarben, Lüsterfarben, Silikon- und Sol-Gel-basierten Farben, gesputterten Schichten, metallischen, Oxinitrid-, Oxicarbid-Schichten und so weiter entsprechend dem Stand der Technik einsetzbar und kombinierbar. Schichten können dabei auch übereinander aufgebracht werden. Bei Kochflächen mit farbiger Unterseitenbeschichtung wird die Farbe der Unterseitenbeschichtung aufgrund der erfindungsgemäßen geringen Farbe und geringen Streuung der Glaskeramik weniger oder nicht verfälscht.

Im Stand der Technik sind für beide Ausführungen von Kochflächen verschiedene anwendbaren Möglichkeiten zur Art und technischen Ausführung von Beschichtungen, Anzeigenvorrichtungen und Sensoren sowie deren Integration in das Kochfeld zusammen mit weiteren Komponenten für Befestigung oder Lichtführung offenbart, z. B. in US 2016281961 A, US 20130098903 A1 und DE 102016101036 A1.

Vorzugsweise sind unter den erfindungsgemäßen Glaskeramik-Kochflächen mit verringerter Farbe eine oder mehrere Anzeigen angeordnet. Die Anzeigenvorrichtungen bestehen aus Licht emittierenden elektronischen Bauteilen, wie z. B. aus weiße oder farbigen Leuchtdioden, RGB-LED, OLED, LCD, Fluoreszenzanzeigen, Projektoren, Leuchtstoffröhren, Displays und Bildschirme. Es sind alle Formen von Anzeigen, punktuelle wie flächige, einschließlich 7-Segment Displays, möglich. Die Emissionsspektren der strahlenden Anzeigen können monochromatisch sein oder polychromatisch mehrere Maxima und breite Bereiche haben, so dass die Anzeigen farbig (wie z. B. violett, blau, purpur, rot, grün, gelb, orange) oder weiß erscheinen. Aufgrund der geringen Buntheit der Glaskeramik können schwarz-weiße und farbige Displays oder Bildschirme ohne störende Farbverfälschung betrachtet werden. Auf das Anbringen von auf der Unterseite aufgebrachten Farbfiltern oder Farbschichten wird bevorzugt verzichtet. Um die Sichtbarkeit der Anzeigen zu verbessern können diese mit Brechungsindex-angepassten Polymeren angeklebt werden oder Blenden angebracht werden. Antireflex-, Streu-, Diffusor- oder Antiglare-Schichten können auf die Glaskeramikplatte aufgebracht werden.

Weiter können Kontroll-, Sensor- und Steuerungs-/Bedienungselemente, wie z. B. solche des kapazitiven oder induktiven Typs, an der Glaskeramikplatte angebracht, aufgedruckt, gebondet oder angepresst werden. Die über einen breiten Wellenlängenbereich hohe IR-Transmission ist für Sensoren zur Temperatursteuerung vorteilhaft. Neben der Anzeige von Betriebszuständen wird es damit für den Nutzer möglich, interaktiv an der Kochfläche tätig zu werden. Es können z. B. Rezepte gelesen, Bilder angesehen werden oder es kann mit dem Intranet kommuniziert werden. Die Steuerung kann über berührungsempfindliche Bildschirme erfolgen. Die Unterseite der Kochfläche kann die üblichen Noppen besitzen oder glatt (über Polieren oder Floaten) ausgeführt sein. Die verbesserte Anzeigefähigkeit kommt bei Kochflächen mit glatter Unterseite besonders zur Geltung, da die farbigen Anzeigen unverzerrt und heller wahrnehmbar sind. Die Kochfläche kann Bereiche mit geringerer Dicke für die Anzeigen enthalten. Da die Transmission exponentiell von der Schichtdicke abhängt wird die Helligkeit der Anzeige, z. B. bei einem Bildschirm, stark erhöht. Die anderen Bereiche der Kochfläche sollen jedoch dicker ausgebildet sein, damit sie über die erfindungsgemäße Helligkeit verfügen.

Wegen seiner verbesserten Anzeigefähigkeit kann die Kochfläche als Teil einer durchgehenden Glaskeramikplatte ausgebildet sein und so als größere Arbeitsplatte bzw. Küchentisch mit Maßen oberhalb 0,5 m$^2$ und verbesserten interaktiven Funktionen vorliegen.

Die Beheizung der Kochflächen erfolgt wie üblich mit Gasbrennern, Induktionsspulen oder Strahlungs-, bzw. Halogenheizkörpern.

Die erfindungsgemäße Glaskeramik eignet sich zur Herstellung von Bereichen mit lokal veränderter Transmission durch elektromagnetische Strahlung, wie es in der WO 2014170275 A2 beschrieben ist. Solche Bereiche mit z. B. erhöhter Lichttransmission sind für Displayfenster vorteilhaft.

Auch bei Kamin- oder Ofensichtscheiben können Beschichtungen, wie z. B. zur blickdichten Abdeckung am Rand der Scheiben, gewünscht sein. Die Anordnung der Beschichtungen auf Ober- bzw. Unterseite der Glaskeramikplatte wird nach den ästhetischen und den spezifischen Anforderungen an chemische und physikalische Eigenschaften vorgenommen.

Diese Verwendungen werden alternativ durch Lithiumaluminiumsilikat-Glaskeramiken mit Keatit- oder Hochquarz-Mischkristallen als Hauptkristallphase bedient.

Die Glaskeramik mit Keatit-Mischkristallen als Hauptkristallphase findet bevorzugt Verwendung als Abdeckplatte, Gehäusekomponente von elektronischen Geräten (backcover) oder eingebaut in Mikrowellenherden, da diese Kristallphase weniger an die Mikrowellenstrahlung ankoppelt und dadurch weniger erhitzt wird.

Weitere bevorzugte Verwendungen für beide Glaskeramik-Ausführungen, seien sie mit Hochquarz- oder mit Keatit-Mischkristallen als Hauptkristallphase, sind die als Kochgeschirr, Reflektor in Beamern. In der Keramik-, Solar- oder Pharmaindustrie oder der Medizintechnik eignen sie sich insbesondere für Produktionsprozesse unter hochreinen Bedingungen, wie z. B. als Unterlagsplatten (setter plates), als Auskleidung von Öfen oder Vakuumkammern, in denen chemische oder physikalische Beschichtungsverfahren durchgeführt werden oder als chemisch resistente Laborausstattung. Weiter finden sie Verwendung als glaskeramischer Gegenstand für Hoch- oder extreme Niedrigtemperatur-an-wendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch-, Grill- oder Bratfläche, als weiße Ware, als Heizkörperabdeckung, als Wafersubstrat, als Gegenstand mit UV-Schutz, als Fassadenplatte oder als Material für Gehäusekomponenten beispielsweise von elektronischen Geräten und/oder Abdeckgläser für IT wie Mobiltelefone, Laptops, Scannergläser, Abdeckung oder Gehäuse von LIDAR-Sensoren oder als Komponente für ballistische Schutzverglasung.

Bevorzugte Verwendungen um Raumtemperatur sind solche als Präzisionsbauteil, wie z. B. als Abstandsnormale oder als Wafer Stages, als Spiegelträgermaterial für reflektierende optische Bauteile wie in der Astronomie und in der LCD- oder EUV-Lithografie, oder als Lasergyroskop.

Die transparenten, eingefärbten Glaskeramiken der vorliegenden Erfindung erfüllen die Anforderungen an die Transparenz, was eine geringe Streuung bedeutet, haben geringe Buntheit und genügen allen weiteren Anforderungen, die an ihre Verwendung gestellt werden, wie z.B. geringe thermische Ausdehnung, chemische Beständigkeit, mechanische Festigkeit, Temperaturbelastbarkeit und hohe Temperatur/Zeitbelastbarkeit hinsichtlich Änderungen ihrer Eigenschaften (wie z.B. thermische Ausdehnung, Transmission, Aufbau von Spannungen).

Die vorliegende Erfindung wird anhand der folgenden Beispiele weiter verdeutlicht.

Die Figuren 1(a) und (b) zeigen Chromatizitätsdiagramme des Farbraums CIExyY mit 2° Normalbeobachter (CIExyY-2°). Die Abbildung Figur 1(a) zeigt qualitativ die Richtung der Farbverschiebung im CIE-Normfarbsystem beim Zudotieren verschiedener färbender Verbindungen. Abhängig von der Zusammensetzung der Glaskeramik, der Helligkeit Y und dem Ausgangsfarbort kann es dabei zu moderaten Änderungen der Richtungen der Farbpfeile kommen. In der Fig. 1(b) sind die Schwarzkörperkurve als gepunktete Linie, die beiden Weißbereiche W1 und W2 als gestrichelte Linien, die Farbkoordinaten der erfindungsgemäßen Beispiele als schwarze Quadrate und Beispiele aus dem Stand der Technik als schwarze Kreuze abgebildet. Die dargestellten Beispiele aus dem Stand der Technik entsprechen den aus der WO 2012076414 A1 bekannten Glaskeramiktypen sowie kommerziell erhältlichen Glaskeramiken der Firmen SCHOTT AG und Eurokera. Die Beispiele aus dem Stand der Technik liegen alle außerhalb des Weißbereichs W1. Wie aus der WO 2012076414 A1 bekannt ist, kann der Weißbereich W1 mit diesen Glaskeramiken nur durch die Verwendung zusätzlicher, aufwändiger Kompensationsfilter erschlossen werden. Die erfindungsgemäßen Beispiele decken diesen Bereich jedoch auch ohne einen solchen Filter ab. Alle dargestellten Farborte beziehen sich auf eine Materialstärke von 4 mm.

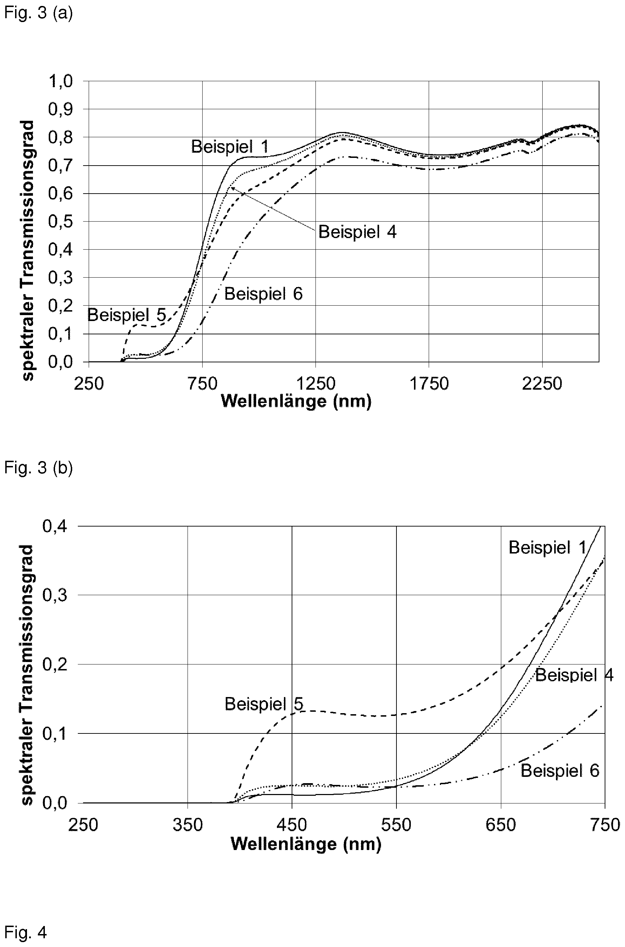

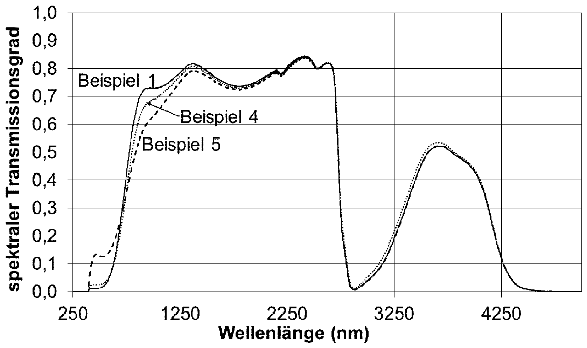

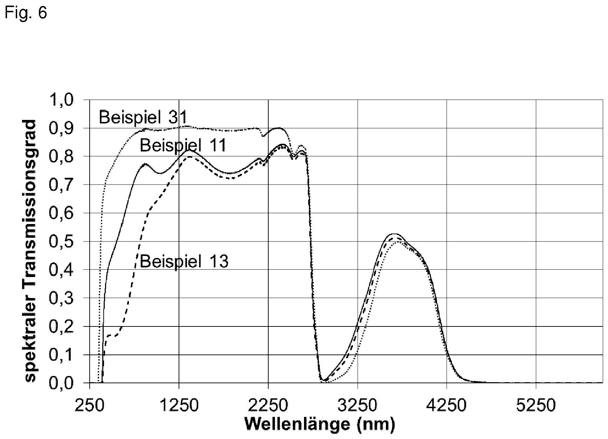

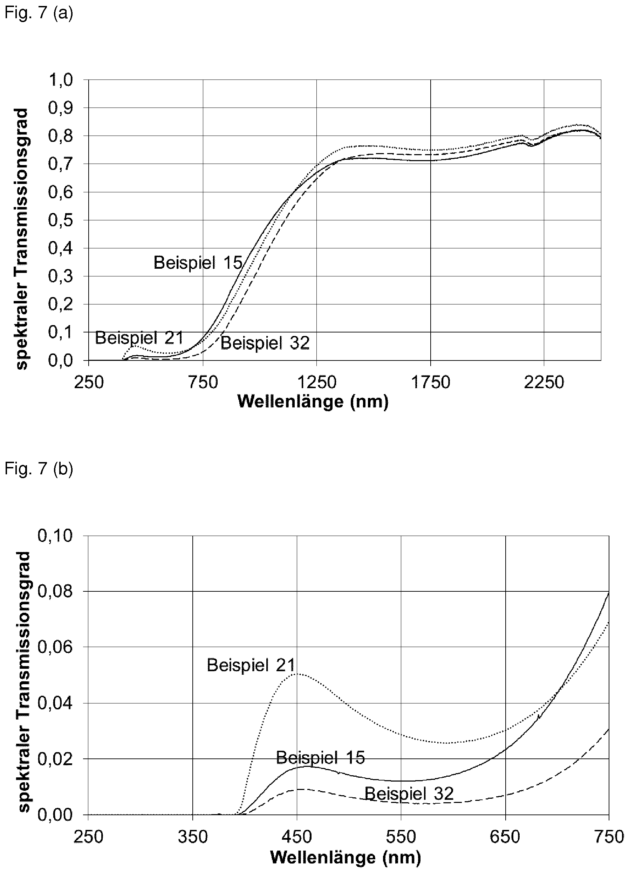

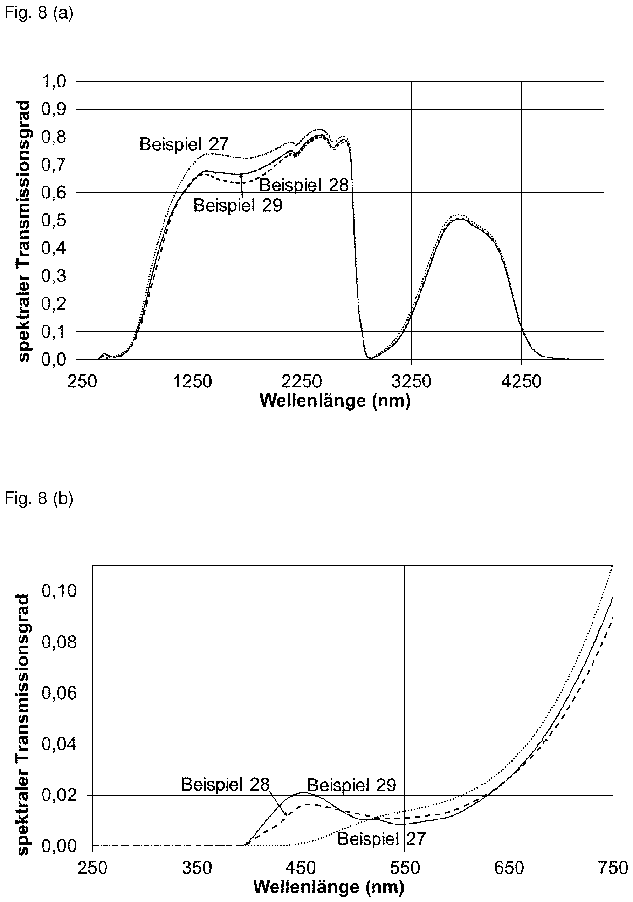

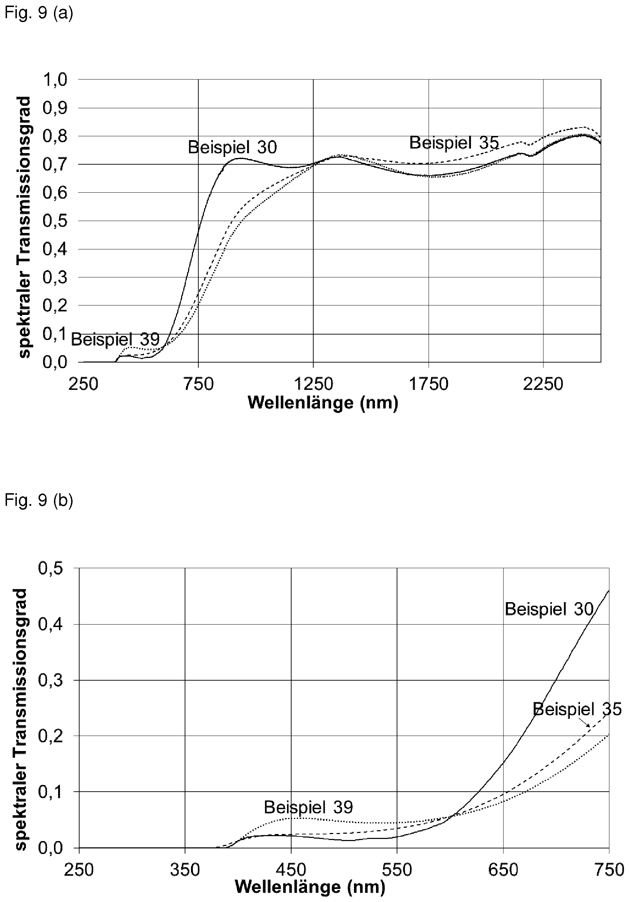

In den Abbildungen Figur 2 bis 9 sind die Transmissionskurven für die aufgeführten kristallisierbaren Gläser und die Glaskeramik-Beispiele mit 4 mm Dicke in verschiedenen Wellenlängenbereichen dargestellt.

Die kristallisierbaren Gläser 1 bis 36 wurden aus in der Glasindustrie üblichen technischen Gemengerohstoffen bei Temperaturen von 1620 °C, 4 Stunden eingeschmolzen. Mit dieser Wahl lassen sich die Forderungen nach wirtschaftlichen Rohstoffen und einem geringen Verunreinigungsgehalt an unerwünschten Verunreinigungen vereinbaren. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1600 °C, 60 Minuten durch Rühren homogenisiert. Nach dieser Homogenisierung wurden die Gläser für 2 Stunden bei 1640 °C geläutert. Anschließend wurden Stücke von ca. 120 x 140 x 30 mm$^3$ Größe gegossen und in einem Kühlofen beginnend ab 640 °C auf Raumtemperatur abgekühlt, um Spannungen abzubauen. Die Gussstücke wurden in die für die Untersuchungen und für die Keramisierung benötigten Größen unterteilt.

Die Verunreinigungen durch typische Spurenelemente bei den verwendeten technischen Rohstoffen liegen bei 200 ppm $B_2O_3$, 30 ppm Cl, 1 ppm CoO, 3 ppm $Cr_2O_3$, 200 ppm $Cs_2O$, 3 ppm CuO, 200 ppm F, 400 ppm $HfO_2$, 3 ppm NiO, 500 ppm $Rb_2O$, 5 ppm $V_2O_5$.

Tabelle 1 zeigt eine Grundzusammensetzung für kristallisierbare Gläser und ihre Eigenschaften. Die Grundzusammensetzung Basisglas 1 entspricht dem Vergleichsglas 1 nach dem Stand der Technik außerhalb der Erfindung. In Tabelle 1 sind auch die Eigenschaften im glasigen Zustand Transformationstemperatur Tg [°C], Verarbeitungstemperatur $V_A$ [°C], $10^2$-Temperatur [°C] und obere Entglasungsgrenze OEG [°C] aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG. Die Glaseigenschaften des Basisglases werden durch geringe Zudotierungen färbender Verbindungen wenig verändert.

Den Gemengerohstoffen dieser Grundzusammensetzung werden unterschiedliche Gehalte färbender Verbindungen zugesetzt und neue Gläser geschmolzen. Durch Zusatz der Komponente $MoO_3$ werden erfindungsgemäße Zusammensetzungen erhalten. Die so erhaltenen Gläser in Tabelle 2 haben die Grundzusammensetzung von Glas 1 und unterscheiden sich nur in den angegebenen färbenden Verbindungen und optional reduzierenden Zusätzen. Sie werden mit den in der Tabelle 2 aufgeführten Keramisierungsprogrammen kristallisiert. Die Transmissions-Eigenschaften und Streuung der erhaltenen Glaskeramiken sind aufgeführt. Auch die mit Röntgenbeugung gemessene Hauptkristallphase ist aufgeführt. Für einige Beispiele wurde auch die thermische Ausdehnung zwischen 20 °C und 300 bzw. 700 °C gemessen.

Dabei handelt es sich bei den Beispielen 1 und 2 um Vergleichsbeispiele aus dem Stand der Technik (WO 2010102859 A1), mit einem $V_2O_5$-Gehalt von 0,023 Gew.%, die aus dem Vergleichsglas 1 mit unterschiedlichen Programmen keramisiert wurden. Die erfindungsgemäßen Beispiel 3 und 4 enthalten weniger als 0,015 Gew.% $V_2O_5$. Im Vergleich zu den $V_2O_5$ freien Beispielen verschieben diese Licht der Normlichtart D65 stärker in Richtung rot, nämlich zu x-Koordinaten >0,4. Im Gegensatz zu den Vergleichsbeispielen 1 und 2 liegt der Wert aber noch im Bereich x < 0,5. Licht das durch die Glaskeramiken der Beispiele 3 und 4 bei einer Dicke von 4 mm transmittiert wird, liegt im Weißbereich W1, aber aufgrund des $V_2O_5$-Gehalts nicht innerhalb des Weißbereichs W2. Die Beispiele 3 und 4 sind die einzigen erfindungsgemäßen Beispiele, die nicht auch innerhalb des besonders bevorzugten Weißbereichs W2 liegen.

Die weiteren Vergleichsbeispiele 17 und 27 enthalten mehr als 0,01 Gew.% $Cr_2O_3$. Durch solche Glaskeramiken transmittiertes Licht der Normlichtart D65 liegt nicht mehr innerhalb des Weißbereichs W1.

Bei kristallisierbaren Ausgangsgläsern gleicher Oxidzusammensetzung ist der Einfluss unterschiedlicher Keramisierungen und des Zusatzes von reduzierenden Verbindungen sowie von Scherben zum Gemenge auf die Transmission zu erkennen. Bei Zugabe von Zucker wird dieser ohne messbare Rückstande oxidiert, beeinflusst jedoch den Redox-Zustand des Glases. Bei Glas 29 wird 0,07 Gew.% S als ZnS dem Gemenge zugesetzt. Im Glas liegt die analysierte Konzentration S < 10 ppm unter der Nachweisgrenze. Sowohl die Zucker- als auch die S-Zugabe führt zu einer starken Verstärkung der Färbung durch Mo.

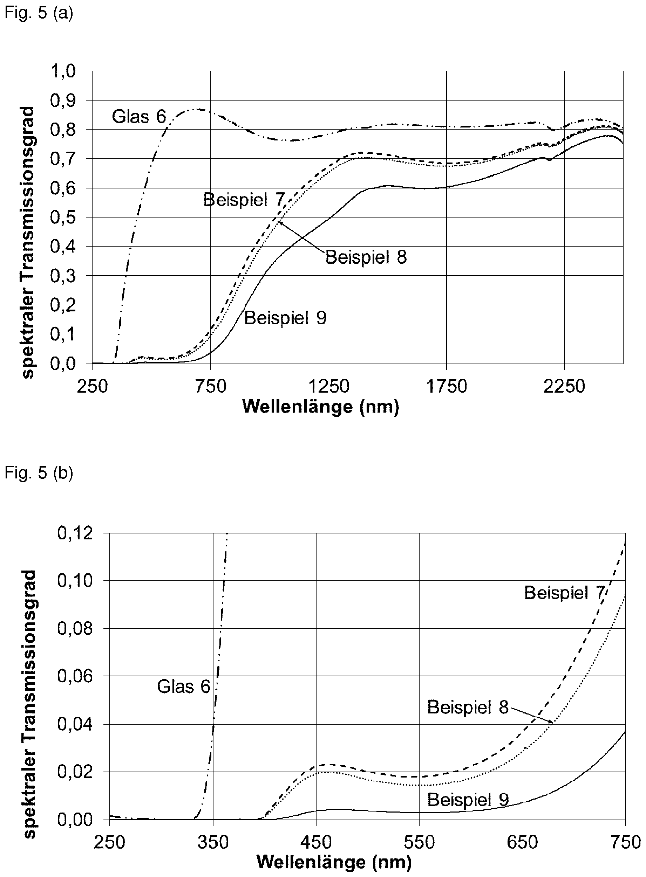

In Fig. 5 ist dargestellt wie aus dem kristallisierbaren Glas 6 durch unterschiedliche Keramisierungen verschiedene Transmissionsspektren erhalten werden. Dieser Abbildung sowie Fig. 2 ist auch zu entnehmen, dass die Einfärbung mit Mo erst mit der Keramisierung einsetzt.

Bei den Glaskeramiken von Tabelle 2 mit Hochquarz-Mischkristallen als Hauptkristallphase wird die thermische Ausdehnung durch die Zudotierungen färbender Verbindungen wenig verändert. Für ausgewählte Beispiele wurde die thermische Ausdehnung zwischen 20 und 300 °C, sowie 20 und 700 °C gemessen und liegt jeweils in einem Bereich von weniger als $\pm$ 0,07 $\cdot10^{-6}$/K um die Mittelwerte -0,27 und 0,13 $\cdot10^{-6}$/K. Die Werte der nicht gemessenen Beispiele werden auch in diesem Bereich angenommen.

Tabelle 3 zeigt die Zusammensetzungen weiterer kristallisierbarer Gläser und ausgewählte Eigenschaften. Dabei entspricht das Vergleichsglas 22 mit seiner Zusammensetzung der Glaskeramik KeraVision® der Firma EuroKera. Das mit Fe, V, Mn und Co dotierte Glas erreicht nach Umwandlung in die Vergleichsglaskeramik 30 (Tabelle 4) nicht die erfindungsgemäße geringe Farbe, insbesondere liegt durch eine solche Glaskeramik transmittiertes Licht nicht mehr innerhalb des Weißbereichs W1. Beispiele 32 und 40 verfügen über eine höheren $TiO_2$-Gehalt und zeigen eine Verstärkung der Einfärbung mit Molybdänoxid. Die Vergleichsbeispiele 33 und 34, hergestellt aus den kristallisierbaren Gläsern 25 und 26 sind nicht mit $SnO_2$ sondern mit $As_2O_3$ geläutert. Es zeigen sich die beschriebenen Nachteile des schwächeren Redoxpartners As. Gegenüber Sn ist die Einfärbung mit $MoO_3$ deutlich geringer und auch der Zusatz von reduzierenden Verbindungen kann die Helligkeit anders als bei $SnO_2$-geläuterten Glaskeramiken nicht signifikant verringern.

Bei dem Keramisierungsprogramm 1 wird bis zu einer Temperatur von 600 °C im Keramisierungsofen in 20 min aufgeheizt. Es wird weiter aufgeheizt. Die Gesamtzeit ab Raumtemperatur bis 680 °C beträgt 23 min. Der Temperaturbereich von 680 °C bis 800 °C ist für die Keimbildung wichtig. Daher wird weiter aufgeheizt. Die Gesamtzeit zwischen 680 °C bis 800 °C beträgt 19 min. Oberhalb von ca. 800 °C erfolgt die Kristallisation der gewünschten Hochquarz-Mischkristallphase. Die Gesamtzeit von 800°C bis Erreichen der Maximaltemperatur 918°C beträgt 24 min (Heizrate 5°C/min). Bei der Maximaltemperatur von 918 °C, Haltezeit 10 min, wird die Zusammensetzung von Kristallen und Restglas eingestellt und die Mikrostruktur homogenisiert. Dabei werden die chemischen und physikalischen Eigenschaften der Glaskeramik eingestellt. Das Abkühlen erfolgt bis 800°C gesteuert (Kühlrate 6°C/min), dann wird die Probe auf Raumtemperatur durch Öffnen der Ofentür abgeschreckt; also zusammengefasst:

Keramisierungsprogramm 1 (Keramisierungszeit 96 min):

    a) Aufheizen innerhalb von 23 Minuten von Raumtemperatur auf 680°C;
    b) Temperaturerhöhung von 680 auf 800°C innerhalb von 19 min, dabei Aufheizen mit 10°C/min auf 730°C, weiteres Aufheizen mit 5°C/min auf 800°C;
    c) Temperaturerhöhung von 800°C auf 918°C innerhalb von 24 min und Haltezeit 10 min bei Maximaltemperatur
    d) Abkühlen auf 800°C innerhalb 20 min, dann schnelle Abkühlung auf Raumtemperatur.

Bei dem Keramisierungsprogramm 2 ist die Keramisierungszeit verkürzt.

Keramisierungsprogramm 2 (Keramisierungszeit 68 min):

    a) schnelles Aufheizen von Raumtemperatur auf 740 °C in 26 min,
    b) Temperaturerhöhung von 740 bis 825 °C in 18 min (Heizrate 4,7 °C/min),
    c) Temperaturerhöhung von 825 °C bis 930 °C in 4 min (Heizrate 26 °C/min), Haltezeit von 4 min bei Maximaltemperatur,
    d) Abkühlen auf 800°C innerhalb 16 min, dann schnelle Abkühlung auf Raumtemperatur.

Mit einem zusätzlichen Keramisierungsprogramm 3 erfolgte die Umwandlung in Glaskeramiken mit Keatit-Mischkristallen als Hauptkristallphase. Bei diesem Programm wurde bis 800 °C wie bei Programm 1 verfahren, Dann wurde abweichend von Programm 1 mit einer Heizrate von 5 °C/min auf eine Maximaltemperatur 960 °C mit Haltezeit 10 min erhitzt. Von der Maximaltemperatur wurde mit 6 °C/min auf 800 °C abgekühlt und dann schnell auf Raumtemperatur abgekühlt.

Die mit dem Keramisierungsprogramm 3 hergestellten Glaskeramiken Beispiele 9 und 12 enthalten mit Röntgenbeugung gemessen 79% Keatit-Mischkristalle als Hauptkristallphase. Zugleich sind die Kristallitgrößen mit ca. 120 nm vergrößert, so dass bei der Verwendung von Anzeigeelementen unterhalb der Glaskeramik störende Streuung auftritt. Die anderen mit den Keramisierungsprogrammen 1 und 2 hergestellten Glaskeramiken enthalten Hochquarz-Mischkristalle mit in der Regel mehr als 90% des Gesamtkristallphasenanteils. Weitere Kristallphasen sind die Keimbildnerphasen $ZrTiO_4$. Zugleich sind die Kristallitgrößen mit weniger als 70 nm so klein, dass bei der Verwendung von Anzeigeelementen unterhalb der Glaskeramik keine störende Streuung auftritt.

Die thermische Ausdehnung der Glaskeramiken mit Hochquarz-Mischkristall als Hauptkristallphase liegt bei $0 \pm 0,5 \cdot 10^{-6}$/K im Bereich von 20-700°C, entspricht also den Anforderungen für temperaturstabile Glaskeramiken. Beispielsweise beträgt die thermische Ausdehnung für die Grundzusammensetzung des Beispiels 1 $0,13 \cdot 10^{-6}$/K und für Beispiel 39 $0,29 \cdot 10^{-6}$/K im Bereich von 20-700°C.

Die Transmissionsmessungen wurden an polierten Platten mit dem Gerät Perkin-Elmer Lambda 900 durchgeführt. Die Transmission wurde an Proben mit einer Dicke von 3,5 bis 4,1 mm bestimmt und auf eine Dicke von 4 mm umgerechnet. Spektrale Transmissionsgrade sind für ausgewählte Wellenlängen angegeben. Aus den gemessenen spektralen Werten im Bereich zwischen 380 nm und 780 nm, der das sichtbare Lichtspektrum repräsentiert, werden die Helligkeit L* und die Farbkoordinaten a*, b* im CIELAB-Farbsystem und die Helligkeit (brightness) Y sowie Farbkoordinaten x, y nach DIN 5033 im CIE-Farbsystem für die gewählte Normlichtart und Beobachterwinkel 2° berechnet. Die Buntheit c* und der Farbabstand d von den Farbkoordinaten von Licht der Normlichtart D65 x = 0,3127 und y = 0,3290 ist angegeben. Dieser wurde wie folgt berechnet:

$$d = \sqrt{(x - 0{,}3127)^2 + (y - 0{,}3290)^2}.$$

Aus dem Verlauf der Transmissionskurve im Bereich von 470 bis 630 nm wurde die Flachheit der Kurve berechnet (Quotient aus höchstem zu niedrigstem Transmissionswert in diesem Bereich). Die Wellenlängen für den maximalen und minimalen Transmissionswert sind ebenfalls angegeben. Die Werte sind für 4 mm dicke polierte Proben angegeben.

Die Streuung der Glaskeramiken wird durch Messung der Trübung (engl. haze) bestimmt. Dabei werden beidseitig polierte 3,5-4,1 mm dicke Proben mit einem kommerziellen Messgerät "haze-guard plus" der Firma BYK Gardener (Norm ASTM D1003-13) mit Normlicht C gemessen. Die Streuung wird durch den Haze-Wert in den Tabellen charakterisiert.

Ergänzend wird an den Proben eine visuelle Begutachtung mit einer handelsüblichen weißen LED vom Typ 7-Segmentanzeige (Hersteller opto devices, Typ OS39D3BWWA) vorgenommen. Die polierten Glaskeramikproben wurden mit einem Abstand von 1 mm auf die weiße LED gelegt und von oben mit einem Abstand von 31 cm im gesamten Winkelbereich, d. h. senkrecht bis streifend zur Glaskeramikoberfläche betrachtet. Abhängig von der Helligkeit der Glaskeramikprobe wird die Leuchtdichte der weißen LED in diesem Abstand senkrecht zur Glaskeramikplatte auf 60 $cd/m^2$ geregelt, bzw. bei sehr dunklen Glaskeramikproben Y < 0,5 % mit maximaler Leistung betrieben. Um den Einfluss von Fremdlicht auszuschließen, wird die Bewertung in einer Dunkelkammer mit geringer Umgebungsbeleuchtung von ca. 4 lux vorgenommen. Diese Bedingungen bedeuten für ein Kochfeld eine sehr kritische Einbau- und Beleuchtungssituation.

Dabei bedeuten die visuellen Bewertungen in den Tabellen (1=keine Streuung wahrnehmbar, 2=geringe, aber tolerierbare Streuung, 3=sichtbare Streuung, erfordert zusätzlichen Aufwand für die Gestaltung des Kochfeldes, 4=deutliche störende Streuung, nicht tolerierbar). Bewertungen ab Stufe 4 sind nicht zulässig und solche ab Stufe 3 bevorzugt zu vermeiden. Bis auf die Beispiele 9 und 12 mit Keatit-Mischkristall (KMK) als Hauptkristallphase sind die Beispiele ohne sichtbare Streuung.

Tabelle 1: Zusammensetzung und Eigenschaften des kristallisierbaren Basisglases 1 mit Grundzusammensetzung.

| Glas Nr. | | 1 |
|---|---|---|
| Zusammensetzung | Gew.% | |
| $Li_2O$ | | 3,80 |
| $Na_2O$ | | 0,60 |
| $K_2O$ | | 0,25 |
| MgO | | 0,29 |
| CaO | | 0,40 |
| SrO | | 0,02 |
| BaO | | 2,23 |
| ZnO | | 1,53 |
| $Al_2O_3$ | | 20,9 |
| $SiO_2$ | | 65,0 |
| $TiO_2$ | | 3,10 |
| $ZrO_2$ | | 1,38 |
| $P_2O_5$ | | 0,09 |
| $SnO_2$ | | 0,25 |
| $As_2O_3$ | | |
| $Fe_2O_3$ | | 0,090 |
| $V_2O_5$ | | 0,023 |
| $MoO_3$ | | |
| $MnO_2$ | | 0,025 |
| $Cr_2O_3$ | | |
| $CeO_2$ | | |

(fortgesetzt)

| Zusammensetzung | Gew.% | |
|---|---|---|
| WO$_3$ | | |
| H$_2$O - Gehalt (β-OH) | mm$^{-1}$ | 0,39 |
| **Eigenschaften glasig** | | |
| Transformationstemperatur Tg | °C | 662 |
| 10$^2$ - Temperatur | °C | 1742 |
| Verarbeitungstemperatur V$_A$ | °C | 1306 |
| OEG-Temperatur | °C | 1260 |

Tabelle 2: Dotierungen und Eigenschaften der erfindungsgemäßen Glaskeramiken und Vergleichsglaskeramiken 1 und 2

| Beispiel Nr. | | 1 | 2 | 3 | 4 | 5 | 6 |
|---|---|---|---|---|---|---|---|
| **Glas Nr.** | | **1** | **1** | **2** | **3** | **4** | **5** |
| **Basisglas** | | **1** | **1** | **1** | **1** | **1** | **1** |
| **Dotierungen** (Gew.%) | | | | | | | |
| Fe$_2$O$_3$ | | 0,090 | 0,090 | 0,120 | 0,088 | 0,088 | 0,088 |
| V$_2$O$_5$ | | 0,023 | 0,023 | 0,010 | 0,013 | | |
| MoO$_3$ | | | | 0,057 | 0,046 | 0,078 | 0,170 |
| MnO$_2$ | | 0,025 | 0,025 | 0,025 | 0,025 | 0,025 | 0,025 |
| Cr$_2$O$_3$ | | | | | | | |
| CeO$_2$ | | | | | | | |
| WO$_3$ | | | | | | | |
| Zusatz Gemenge | | | | | | | |
| **Keramisierungs-programm** | # | 1 | 2 | 1 | 1 | 1 | 1 |
| **Transmission 4 mm Dicke Normlicht** D65,2° | | | | | | | |
| 470 nm | % | 1,2 | 0,7 | 2,9 | 2,4 | 13,3 | 2,7 |
| 630 nm | % | 9,9 | 6,6 | 12,6 | 9,5 | 17,2 | 3,9 |
| 950 nm | % | 73,0 | 71,9 | 66,5 | 67,7 | 60,8 | 45,0 |
| 1600 nm | % | 76,4 | 76,3 | 70,9 | 75,7 | 74,8 | 70,3 |
| 3700 nm | % | 52,0 | 51,1 | 50,0 | 53,2 | 52,2 | 50,4 |
| **Farbkoordinaten (CIE) in Transmission** | | | | | | | |
| x | | 0,502 | 0,517 | 0,447 | 0,436 | 0,337 | 0,348 |
| y | | 0,367 | 0,358 | 0,365 | 0,351 | 0,334 | 0,327 |
| Helligkeit Y | % | 3,6 | 2,2 | 5,8 | 4,4 | 13,6 | 2,6 |
| Farbabstand d | | 0,193 | 0,207 | 0,139 | 0,125 | 0,025 | 0,035 |
| **Farbkoordinaten (CIELAB) in Transmission** | | | | | | | |
| L* | | 22,5 | 16,6 | 29,0 | 24,9 | 43,6 | 18,4 |
| a* | | 21,4 | 21,0 | 17,1 | 16,4 | 5,1 | 5,7 |

(fortgesetzt)

| Farbkoordinaten (CIELAB) in Transmission | | | | | | | |
|---|---|---|---|---|---|---|---|
| b* | | 20,6 | 17,5 | 17,2 | 12,5 | 3,5 | 1,7 |
| c* | | 29,7 | 27,4 | 24,3 | 20,6 | 6,1 | 6,0 |
| **Flachheit Transmission** (Wellenlänge bei Max./Min.) | Nm | 8,4 630 /470 | 10,0 630 /470 | 4,4 630 /470 | 4,0 630 /470 | 1,4 630 /529 | 1,7 630 /538 |
| Visuelle Bewertung | | 1 | 1 | 1 | 1 | 1 | 1 |
| haze | % | 0,8 | 0,5 | 1,5 | 1,5 | 1,5 | 1,1 |
| **Thermische Ausdehnung** | | | | | | | |
| $\alpha_{20/300}$ | $10^{-6}$/K | -0,26 | -0,29 | | | | |
| $\alpha_{20/700}$ | $10^{-6}$/K | 0,13 | 0,17 | | | | |
| **Röntgenbeugung** | | | | | | | |
| Hauptkristallphase | | HQMK | HQMK | HQMK | HQMK | HQMK | HQMK |

Tabelle 2 (Fortsetzung): Dotierungen und Eigenschaften der erfindungsgemäßen Glaskeramiken

| Beispiel Nr. | 7 | 8 |
|---|---|---|
| **Glas Nr.** | 6 | 6 |
| **Basisglas** | 1 | 1 |
| **Dotierungen** (Gew.%) | | |
| $Fe_2O_3$ | 0,088 | 0,088 |
| $V_2O_5$ | | |
| $MoO_3$ | 0,170 | 0,170 |
| $MnO_2$ | 0,025 | 0,025 |
| $Cr_2O_3$ | | |
| $CeO_2$ | | |
| $WO_3$ | | |
| Zusatz Gemenge | 50% Scherben | 50% Scherben |
| **Keramisierungs-programm** | 1 | 2 |
| **Eigenschaften keramisiert** | | |
| **Transmission 4 mm Dicke Normlicht D65,2°** | | |
| 470 nm | 2,3 | 2,0 |
| 630 nm | 3,9 | 2,3 |
| 950 nm | 41,5 | 35,3 |
| 1600 nm | 69,8 | 68,5 |
| 3700 nm | 51,8 | 52,0 |
| **Farbkoordinaten (CIE) in Transmission** | | |
| X | 0,338 | 0,329 |
| Y | 0,318 | 0,311 |

(fortgesetzt)

| Farbkoordinaten (CIE) in Transmission | | |
|---|---|---|
| Helligkeit Y | 2,0 | 1,6 |
| Farbabstand d | 0,028 | 0,024 |
| **Farbkoordinaten (CIELAB) in Transmission** | | |
| L* | 15,7 | 13,4 |
| a* | 5,2 | 4,5 |
| b* | 0,1 | -1,1 |
| c* | 5,2 | 4,7 |
| **Flachheit Transmission** (Wellenlänge bei Max./Min.) | 2,2 630/545 | 1,6 630/552 |
| **Streuung 4 mm Dicke Normlicht D65,2°** | | |
| Visuelle Bewertung | 1 | 1 |
| haze | 0,4 | 2,3 |
| **Thermische Ausdehnung** | | |
| $\alpha_{20/300}$ | | |
| $\alpha_{20/700}$ | | |
| **Röntgenbeugung** | | |
| Hauptkristall-phase | HQMK | HQMK |

Tabelle 2 (Fortsetzung): Dotierungen und Eigenschaften erfindungsgemäßer Glaskeramiken

| Beispiel Nr. | | 9 | 10 | 11 | 12 | 13 | 14 | 15 |
|---|---|---|---|---|---|---|---|---|
| **Glas Nr.** | | **6** | **7** | **8** | **8** | **9** | **10** | **11** |
| **Basisglas** | | **1** | **1** | **1** | **1** | **1** | **1** | **1** |
| **Dotierungen** (Gew.%) | | | | | | | | |
| $Fe_2O_3$ | | 0,088 | 0,017 | 0,086 | 0,086 | 0,090 | 0,084 | 0,062 |
| $V_2O_5$ | | | | | | | | |
| $MoO_3$ | | 0,170 | 0,170 | 0,013 | 0,013 | 0,057 | 0,150 | 0,150 |
| $MnO_2$ | | 0,025 | | 0,025 | 0,025 | 0,025 | 0,025 | 0,025 |
| $Cr_2O_3$ | | | | | | | | |
| $CeO_2$ | | | | | | | | |
| $WO_3$ | | | | | | | | |
| Zusatz Gemenge | | 50% Scherben | | | | | 0,1% Zucker ohne Nitrat | |
| **Keramisierungs-programm** | # | 3 | 1 | 1 | 3 | 1 | 1 | 1 |
| **Eigenschaften keramisiert** | | | | | | | | |
| **Transmission 4 mm Dicke Normlicht D65,2°** | | | | | | | | |
| 470 nm | % | 0,4 | 0,8 | 41,6 | 33,5 | 16,7 | 0,12 | 1,2 |
| 630 nm | % | 0,5 | 0,6 | 58,1 | 43,7 | 21,7 | 0,07 | 1,9 |

(fortgesetzt)

| Transmission 4 mm Dicke Normlicht D65,2° | | | | | | | | |
|---|---|---|---|---|---|---|---|---|
| 950 nm | % | 27,0 | 28,9 | 75,5 | 73,0 | 62,1 | 11,2 | 36,7 |
| 1600 nm | % | 60,1 | 75,3 | 77,1 | 76,3 | 75,1 | 56,9 | 71,5 |
| 3700 nm | % | 56,2 | 48,5 | 52,4 | 56,1 | 51,0 | 48,7 | 52,4 |
| **Farbkoordinaten (CIE) in Transmission** | | | | | | | | |
| x | | 0,341 | 0,290 | 0,344 | 0,3401 | 0,337 | 0,271 | 0,323 |
| y | | 0,322 | 0,275 | 0,357 | 0,3553 | 0,339 | 0,264 | 0,305 |
| Helligkeit Y | % | 0,3 | 0,5 | 50,1 | 38,2 | 17,6 | 0,1 | 1,4 |
| Farbabstand d | | 0,029 | 0,059 | 0,042 | 0,038 | 0,026 | 0,077 | 0,026 |
| **Farbkoordinaten (CIELAB) in Transmission** | | | | | | | | |
| L* | | 3,2 | 4,3 | 76,2 | 68,2 | 49,0 | 0,6 | 11,7 |
| a* | | 1,5 | 2,0 | 2,1 | 0,9 | 4,3 | 0,2 | 4,3 |
| b* | | 0,2 | -3,4 | 13,3 | 11,1 | 4,8 | -0,6 | -1,8 |
| c* | | 1,6 | 3,9 | 13,5 | 11,1 | 6,4 | 0,7 | 4,7 |
| **Flachheit Transmission** (Wellenlänge bei Max./Min.) | nm | 1,8 630 /552 | 1,9 630 /567 | 1,4 630 /470 | 1,3 630 /470 | 1,3 630 /524 | 2,4 470 /580 | 1,6 630 /553 |
| **Streuung 4 mm Dicke Normlicht D65,2°** | | | | | | | | |
| Visuelle Bewertung | | 3 | 1 | 1 | 3 | 1 | 1 | 1 |
| haze | % | 9,2 | 0,8 | 1,7 | 10,7 | 1,3 | 2,6 | 0,5 |
| **Thermische Ausdehnunq** | | | | | | | | |
| $\alpha_{20/300}$ | $10^{-6}$/K | 0,56 | | | | -0,24 | | |
| $\alpha_{20/700}$ | $10^{-6}$/K | | | | 0,70 | 0,16 | | |
| **Röntgenbeugung** | | | | | | | | |
| Hauptkristallphase | | KMK | HQMK | HQMK | KMK | HQMK | HQMK | HQMK |

Tabelle 2 (Fortsetzung): Dotierungen und Eigenschaften erfindungsgemäßer Glaskeramiken und Vergleichsglaskeramik 17.

| Beispiel Nr. | | **16** | **17** | **18** | **19** | **20** | **21** | **22** |
|---|---|---|---|---|---|---|---|---|
| **Glas Nr.** | | **11** | **12** | **13** | **13** | **14** | **15** | **15** |
| **Basisglas** | | **1** | **1** | **1** | **1** | **1** | **1** | **1** |
| **Dotierungen** (Gew.%) | | | | | | | | |
| $Fe_2O_3$ | | 0,062 | 0,080 | 0,062 | 0,062 | 0,061 | 0,062 | 0,062 |
| $V_2O_5$ | | | 0,010 | | | | | |
| $MoO_3$ | | 0,150 | 0,150 | 0,150 | 0,150 | 0,150 | 0,040 | 0,040 |
| $MnO_2$ | | 0,025 | 0,025 | 0,023 | 0,023 | 0,023 | 0,025 | 0,025 |
| $Cr_2O_3$ | | | 0,0036 | | | | | |
| $CeO_2$ | | | | | 0,060 | 0,060 | | |
| $WO_3$ | | | | | | 0,050 | | |

(fortgesetzt)

| Dotierungen (Gew.%) | | | | | | | | |
|---|---|---|---|---|---|---|---|---|
| Zusatz Gemenge | | | | | | | 0,2% Zucker ohne Nitrat | 0,2% Zucker ohne Nitrat |
| **Keramisierungs-programm** | # | 2 | 1 | 1 | 2 | 1 | 1 | 2 |
| **Eigenschaften keramisiert** | | | | | | | | |
| **Transmission 4 mm Dicke Normlicht D65,2°** | | | | | | | | |
| 470 nm | % | 1,5 | 0,3 | 2,6 | 2,3 | 2,4 | 4,8 | 4,2 |
| 630 nm | % | 1,6 | 1,5 | 3,4 | 2,8 | 2,9 | 2,8 | 2,2 |
| 950 nm | % | 34,2 | 49,3 | 44,5 | 41,8 | 41,6 | 32,1 | 28,9 |
| 1600 nm | % | 70,9 | 70,9 | 73,7 | 73,1 | 73,3 | 75,7 | 74,7 |
| 3700 nm | % | 52,4 | 50,5 | 52,0 | 51,8 | 51,9 | 50,6 | 50,5 |
| **Farbkoordinaten (CIE) in Transmission** | | | | | | | | |
| x | | 0,315 | 0,490 | 0,341 | 0,331 | 0,329 | 0,268 | 0,260 |
| y | | 0,299 | 0,367 | 0,324 | 0,316 | 0,311 | 0,276 | 0,266 |
| Helligkeit Y | % | 1,2 | 0,6 | 2,4 | 2,0 | 2,1 | 3,0 | 2,5 |
| Farbabstand d | | 0,030 | 0,181 | 0,028 | 0,023 | 0,024 | 0,069 | 0,082 |
| **Farbkoordinaten (CIELAB) in Transmission** | | | | | | | | |
| L* | | 10,3 | 5,4 | 17,4 | 15,3 | 15,9 | 20,2 | 18,1 |
| a* | | 3,9 | 9,3 | 5,0 | 4,5 | 4,9 | 1,2 | 1,2 |
| b* | | -2,6 | 5,9 | 0,9 | -0,5 | -1,1 | -9,3 | -10,4 |
| c* | | 4,7 | 11,0 | 5,1 | 4,5 | 5,1 | 9,4 | 10,5 |
| **Flachheit Transmission** (Wellenlänge bei Max./Min.) | nm | 1,5 630 /558 | 5,7 630 /470 | 1,6 630 /542 | 1,6 630 /549 | 1,6 630 /545 | 1,8 470 /594 | 2,0 470 /601 |
| **Streuung 4 mm Dicke Normlicht D65,2°** | | | | | | | | |
| Visuelle Bewertung | | 1 | 1 | 1 | 1 | 1 | 1 | 1 |
| haze | % | 3,1 | 0,8 | 0,5 | 1,0 | 1,0 | 0,8 | 2,1 |
| **Thermische Ausdehnung** | | | | | | | | |
| $\alpha_{20/300}$ | $10^{-6}$/K | | -0,23 | -0,21 | -0,27 | -0,25 | -0,27 | -0,32 |
| $\alpha_{20/700}$ | $10^{-6}$/K | | 0,17 | 0,17 | 0,11 | 0,15 | 0,14 | 0,09 |
| **Röntgenbeugung** | | | | | | | | |
| Hauptkristallphase | | HQMK | HQMK | HQMK | HQMK | HQMK | HQMK | HQMK |

Tabelle 2 (Fortsetzung): Dotierungen und Eigenschaften erfindungsgemäßer Glaskeramiken und Vergleichsglaskeramik 27.

| Beispiel Nr. | | 23 | 24 | 25 | 26 | 27 | 28 | 29 |
|---|---|---|---|---|---|---|---|---|
| **Glas Nr.** | | 16 | 16 | 17 | 18 | 19 | 20 | 21 |
| **Basisglas** | | 1 | 1 | 1 | 1 | 1 | 1 | 1 |

(fortgesetzt)

| Dotierungen (Gew.%) | | | | | | | | |
|---|---|---|---|---|---|---|---|---|
| Fe$_2$O$_3$ | | 0,062 | 0,062 | 0,061 | 0,062 | 0,062 | 0,062 | 0,061 |
| V$_2$O$_5$ | | | | | | | | |
| MoO$_3$ | | 0,015 | 0,015 | 0,019 | 0,014 | 0,150 | 0,150 | 0,150 |
| MnO$_2$ | | 0,025 | 0,025 | 0,025 | 0,025 | 0,025 | 0,025 | 0,025 |
| CoO | | | | | | | | 0,020 |
| Cr$_2$O$_3$ | | | | | | 0,020 | | |
| Nd$_2$O$_3$ | | | | | 0,042 | | | |
| NiO | | | | | | | 0,027 | |
| Zusatz Gemenge | | | | 0,1% Zucker ohne Nitrat | | | | |
| **Keramisierungs-programm** | # | 1 | 2 | 1 | 1 | 1 | 1 | 1 |
| **Eigenschaften keramisiert** | | | | | | | | |
| **Transmission 4 mm Dicke Normlicht D65,2** | | | | | | | | |
| 470 nm | % | 42,6 | 43,4 | 22,2 | 42,8 | 0,3 | 1,6 | 2,0 |
| 630 nm | % | 53,4 | 52,7 | 21,2 | 54,2 | 2,6 | 2,1 | 2,0 |
| 950 nm | % | 76,4 | 75,9 | 57,4 | 76,5 | 43,5 | 36,6 | 39,7 |
| 1600 nm | % | 80,8 | 80,4 | 78,1 | 80,8 | 73,1 | 63,8 | 66,7 |
| 3700 nm | % | 53,6 | 53,4 | 50,5 | 53,2 | 51,9 | 50,8 | 50,4 |
| **Farbkoordinaten (CIE) in Transmission** | | | | | | | | |
| x | | 0,335 | 0,332 | 0,311 | 0,334 | 0,475 | 0,341 | 0,315 |
| y | | 0,348 | 0,345 | 0,326 | 0,348 | 0,452 | 0,309 | 0,257 |
| Helligkeit Y | % | 47,6 | 47,4 | 20,4 | 47,8 | 1,5 | 1,3 | 1,2 |
| Farbabstand d | | 0,029 | 0,025 | 0,003 | 0,029 | 0,204 | 0,035 | 0,072 |
| **Farbkoordinaten (CIELAB) in Transmission** | | | | | | | | |
| L* | | 74,6 | 74,5 | 52,3 | 74,7 | 12,5 | 11,3 | 10,2 |
| a* | | 1,5 | 1,4 | 0,2 | 1,4 | 4,2 | 6,0 | 9,9 |
| b* | | 9,0 | 7,6 | -0,8 | 8,9 | 18,1 | -0,6 | -6,9 |
| c* | | 9,1 | 7,8 | 0,8 | 9,0 | 18,5 | 6,1 | 12,1 |
| **Flachheit Transmission** (Wellenlänge bei Max./Min.) | nm | 1,3 630 /470 | 1,2 630 /470 | 1,1 470 /572 | 1,3 630 /470 | 7,8 630 /470 | 2,0 630 /538 | 2,4 630 /546 |
| **Streuung 4 mm Dicke Normlicht D65,2°** | | | | | | | | |
| Visuelle Bewertung | | 1 | 1 | 1 | 1 | 1 | 1 | 1 |
| haze | % | 1,9 | 1,6 | 2,7 | | 0,6 | 0,6 | 0,7 |
| **Thermische Ausdehnung** (10$^{-6}$/K) | | | | | | | | |
| α$_{20/300}$ | | -0,24 | -0,28 | -0,24 | -0,21 | | -0,23 | -0,23 |
| α$_{20/700}$ | | 0,16 | 0,09 | 0,14 | 0,16 | | 0,17 | 0,15 |
| **Röntgenbeugung** | | | | | | | | |
| Hauptkristallphase | | HQMK | HQMK | HQMK | HQMK | HQMK | HQMK | HQMK |

Tabelle 3: Zusammensetzungen und Eigenschaften kristallisierbarer Gläser und Vergleichsgläser Nr. 22, 25 und 26

| Glas Nr. | | 22 | 23 | 24 | 25 | 26 | 27 |
|---|---|---|---|---|---|---|---|
| **Zusammensetzung** | Gew.% | | | | | | |
| $Li_2O$ | | 3,83 | 3,65 | 3,82 | 3,83 | 3,79 | 3,71 |
| $Na_2O$ | | 0,57 | 0,56 | 0,60 | 0,61 | 0,60 | 0,46 |
| $K_2O$ | | 0,21 | 0,09 | 0,27 | 0,27 | 0,26 | 0,14 |
| MgO | | 0,19 | 0,27 | 0,30 | 0,30 | 0,29 | 0,98 |
| CaO | | 0,36 | 0,39 | 0,43 | 0,43 | 0,43 | |
| SrO | | | 0,05 | 0,02 | 0,02 | 0,02 | |
| BaO | | 2,41 | 0,88 | 2,22 | 2,21 | 2,23 | |
| ZnO | | 1,41 | 1,7 | 1,52 | 1,49 | 1,47 | 1,58 |
| $Al_2O_3$ | | 20,2 | 21,4 | 20,9 | 20,9 | 21,0 | 20,9 |
| $SiO_2$ | | 65,8 | 66,8 | 64,8 | 64,8 | 65,0 | 67,5 |
| $TiO_2$ | | 3,02 | 2,23 | 4,10 | 3,14 | 3,05 | 2,47 |
| $ZrO_2$ | | 1,39 | 1,83 | 0,43 | 1,40 | 1,40 | 1,69 |
| $P_2O_5$ | | 0,11 | 0,03 | 0,10 | 0,10 | 0,10 | 0,09 |
| $SnO_2$ | | 0,30 | 0,12 | 0,25 | | | 0,23 |
| $As_2O_3$ | | | | | 0,28 | 0,15 | |
| $Fe_2O_3$ | | 0,090 | 0,014 | 0,061 | 0,062 | 0,061 | 0,0600 |
| $V_2O_5$ | | 0,016 | | | | | |
| $MoO_3$ | | | 0,007 | 0,150 | 0,150 | 0,150 | 0,1500 |
| $MnO_2$ | | 0,021 | | 0,024 | 0,025 | 0,025 | 0,024 |
| CoO | | 0,027 | | | | | |
| Zusatz Gemenge | (Gew. %) | | | | | 0,2% Zucker ohne Nitrat | |
| **Eigenschaften glasig** | | | | | | | |
| Transformationstemperatur Tg | °C | | 685 | 667 | 671 | 672 | 674 |
| $10^2$ - Temperatur | °C | | 1743 | | | | 1729 |
| Verarbeitungstemperatur $V_A$ | °C | 1313 | 1314 | 1294 | 1297 | 1301 | 1310 |
| OEG-Temperatur | °C | | 1280 | | | | 1280 |

Tabelle 3 (Fortsetzung): Zusammensetzungen und Eigenschaften kristallisierbarer Gläser

| Glas Nr. | | 28 | 29 | 30 | 31 |
|---|---|---|---|---|---|
| **Zusammensetzung** | Gew.% | | | | |
| Li20 | | 4,03 | 3,82 | 3,31 | 3,30 |
| $Na_2O$ | | 0,42 | 0,60 | 0,37 | 0,36 |
| $K_2O$ | | 0,40 | 0,26 | 0,36 | 0,36 |
| MgO | | 0,77 | 0,30 | 0,56 | 0,56 |
| CaO | | | 0,43 | 0,58 | 0,58 |

(fortgesetzt)

| Glas Nr. | | 28 | 29 | 30 | 31 |
|---|---|---|---|---|---|
| **Zusammensetzung** | Gew.% | | | | |
| SrO | | | 0,02 | | 0,01 |
| BaO | | 0,39 | 2,23 | 1,62 | 1,63 |
| ZnO | | 0,56 | 1,48 | 1,92 | 1,90 |
| $Al_2O_3$ | | 20,1 | 21 | 21,4 | 21,4 |
| $SiO_2$ | | 68,0 | 64,5 | 64,8 | 64,7 |
| $TiO_2$ | | 4,69 | 3,08 | 3,20 | 4,02 |
| $ZrO_2$ | | | 1,40 | 1,35 | 0,68 |
| $P_2O_5$ | | 0,11 | 0,56 | 0,04 | 0,03 |
| $SnO_2$ | | 0,24 | 0,23 | 0,24 | 0,22 |
| $As_2O_3$ | | | | | |
| $Fe_2O_3$ | | 0,062 | 0,062 | 0,099 | 0,100 |
| $V_2O_5$ | | | | | |
| $MoO_3$ | | 0,140 | 0,040 | 0,160 | 0,149 |
| $MnO_2$ | | | 0,025 | | |
| $Nd_2O_3$ | | | | | |
| Zusatz Gemenge | (Gew.%) | | 0,07% S | | |
| **Eigenschaften glasig** | | | | | |
| Transformationstemperatur Tg | °C | 670 | 668 | 675 | 670 |
| 102 - Temperatur | °C | | | 1733 | |
| Verarbeitungstemperatur $V_A$ | °C | 1319 | 1299 | 1300 | 1295 |
| OEG-Temperatur | °C | | | 1275 | |

Tabelle 3 (Fortsetzung): Zusammensetzungen und Eigenschaften kristallisierbarer Gläser und Vergleichsglas 32

| Glas Nr. | | 32 | 33 | 34 | 35 | 36 |
|---|---|---|---|---|---|---|
| **Zusammensetzung** | Gew.% | | | | | |
| $Li_2O$ | | 2,67 | 4,13 | 3,22 | 3,67 | 3,73 |
| $Na_2O$ | | 0,54 | 0,64 | 0,78 | 0,77 | 0,78 |
| $K_2O$ | | 0,24 | 0,29 | 0,20 | 0,21 | 0,58 |
| MgO | | 1,73 | 0,24 | 0,81 | 0,77 | 0,20 |
| CaO | | 0,69 | 0,52 | 0,21 | 0,21 | 0,21 |
| SrO | | | 0,02 | | | |
| BaO | | 1,97 | 2,05 | 2,42 | 0,68 | 2,41 |
| ZnO | | 1,65 | | 1,16 | 0,90 | 0,93 |
| $Al_2O_3$ | | 20,0 | 21,7 | 19,8 | 22,2 | 20,0 |
| $SiO_2$ | | 64,9 | 65,8 | 66,9 | 65,4 | 66,4 |
| $TiO_2$ | | 5,04 | 3,58 | 2,68 | 4,26 | 2,83 |

(fortgesetzt)

| Glas Nr. | | 32 | 33 | 34 | 35 | 36 |
|---|---|---|---|---|---|---|
| **Zusammensetzung** | Gew.% | | | | | |
| $ZrO_2$ | | | 0,64 | 1,44 | 0,54 | 1,40 |
| $P_2O_5$ | | 0,07 | 0,03 | | | |
| $SnO_2$ | | 0,24 | 0,25 | 0,20 | 0,19 | 0,39 |
| $As_2O_3$ | | | | | | |
| $Fe_2O_3$ | | 0,091 | 0,065 | 0,110 | 0,085 | 0,033 |
| $V_2O_5$ | | | | | | |
| $MoO_3$ | | 0,099 | 0,026 | 0,043 | 0,079 | 0,045 |
| $MnO_2$ | | 0,018 | | | | |
| Zusatz Gemenge | (Gew. %) | | | | 0,1% Zucker ohne Nitrat | 0,2% Zucker ohne Nitrat |
| **Eigenschaften glasig** | | | | | | |
| Transformationstemperatur Tg | °C | 671 | 685 | 680 | 675 | 674 |
| $10^2$ - Temperatur | °C | | 1774 | 1770 | 1693 | 1770 |
| Verarbeitungstemperatur $V_A$ | °C | 1296 | 1327 | 1331 | 1294 | 1331 |
| OEG-Temperatur | °C | 1265 | 1255 | 1260 | | |

Tabelle 4: Eigenschaften erfindungsgemäßer Glaskeramiken und Vergleichsglaskeramiken Beispiele 30, 33 und 34

| Beispiel Nr. | | 30 | 31 | 32 | 33 | 34 | 35 | 36 |
|---|---|---|---|---|---|---|---|---|
| **Glas Nr.** | | **22** | **23** | **24** | **25** | **26** | **27** | **28** |
| **Keramisierungs-programm** | | 2 | 1 | 1 | 1 | 1 | 2 | 1 |
| **Eigenschaften keramisiert** | | | | | | | | |
| **Transmission 4 mm Dicke Normlicht D65,2°** | | | | | | | | |
| 470 nm | % | 1,9 | 74,2 | 0,9 | 43,4 | 39,4 | 2,5 | 0,8 |
| 630 nm | % | 10,8 | 83,6 | 0,6 | 57,1 | 52,3 | 7,8 | 1,7 |
| 950 nm | % | 72,0 | 89,3 | 25,6 | 82,2 | 83,1 | 55,4 | 37,6 |
| 1600 nm | % | 67,5 | 89,6 | 73,5 | 82,9 | 82,8 | 70,8 | 73,5 |
| 3700 nm | % | 49,4 | 49,7 | 51,5 | 53,6 | 52,0 | 49,9 | 52,4 |
| **Farbkoordinaten (CIE) in Transmission** | | | | | | | | |
| x | | 0,476 | 0,323 | 0,276 | 0,342 | 0,342 | 0,414 | 0,393 |
| y | | 0,322 | 0,338 | 0,265 | 0,355 | 0,351 | 0,359 | 0,350 |
| Helligkeit Y | % | 3,5 | 79,5 | 0,5 | 48,7 | 43,7 | 4,2 | 1,0 |
| Farbabstand d | | 0,163 | 0,011 | 0,089 | 0,024 | 0,037 | 0,106 | 0,083 |
| **Farbkoordinaten (CIELAB) in Transmission** | | | | | | | | |
| L* | | 21,9 | 91,4 | 4,5 | 75,3 | 72,0 | 24,2 | 8,7 |
| a* | | 25,8 | 0,8 | 1,8 | 1,8 | 3,1 | 11,6 | 6,1 |
| b* | | 11,0 | 5,2 | -4,5 | 12,3 | 10,8 | 11,4 | 4,9 |

(fortgesetzt)

| Farbkoordinaten (CIELAB) in Transmission | | | | | | | | |
|---|---|---|---|---|---|---|---|---|
| c* | | 28,0 | 5,3 | 4,9 | 12,5 | 11,2 | 16,3 | 7,8 |
| **Flachheit Transmission** (Wellenlänge bei Max./Min.) | nm | 8,0 630 /504 | 1,1 630 /470 | 2,1 470 /571 | 1,3 630 /470 | 1,3 630 /470 | 3,1 630 /470 | 2,3 630 /509 |
| **Streuung 4 mm Dicke Normlicht D65,2°** | | | | | | | | |
| Visuelle Bewertung | | 1 | 1 | 1 | 1 | 1 | 1 | 1 |
| haze | % | 0,2 | 1,3 | 3,3 | 2,0 | 1,4 | 0,8 | 0,1 |
| **Thermische Ausdehnung** | | | | | | | | |
| $\alpha_{20/300}$ | $10^{-6}$/K | -0,40 | -0,74 | -0,13 | -0,24 | -0,27 | -0,45 | -0,14 |
| $\alpha_{20/700}$ | $10^{-6}$/K | -0,03 | -0,39 | 0,23 | 0,16 | 0,12 | -0,15 | 0,14 |
| **Röntgenbeugung** | | | | | | | | |
| Hauptkristallphase | | HQMK | HQMK | HQMK | HQMK | HQMK | HQMK | HQMK |

Tabelle 4 (Fortsetzung): Eigenschaften erfindungsgemäßer Glaskeramiken

| Beispiel Nr. | | **37** | **38** | **39** | **40** |
|---|---|---|---|---|---|
| **Glas Nr.** | | **29** | **30** | **30** | **31** |
| **Keramisierungs-programm** | | **1** | **1** | **2** | **1** |
| **Eigenschaften keramisiert** | | | | | |
| **Transmission 4 mm Dicke Normlicht D65,** | | | | | |
| 470 nm | % | 1,8 | 5,8 | 5,2 | 0,6 |
| 630 nm | % | 0,6 | 8,3 | 7,0 | 1,0 |
| 950 nm | % | 18,6 | 53,4 | 50,9 | 28,2 |
| 1600 nm | % | 73,2 | 69,1 | 68,1 | 66,1 |
| 3700 nm | % | 49,2 | 46,3 | 46,4 | 47,8 |
| **Farbkoordinaten (CIE) in Transmission** | | | | | |
| x | | 0,234 | 0,344 | 0,338 | 0357 |
| y | | 0,238 | 0,325 | 0,320 | 0,331 |
| Helligkeit Y | % | 0,9 | 5,9 | 5,0 | 0,6 |
| Farbabstand d | | 0,120 | 0,032 | 0,027 | 0,044 |
| **Farbkoordinaten (CIELAB) in Transmission** | | | | | |
| L* | | 7,9 | 29,1 | 26,8 | 5,6 |
| a* | | 1,2 | 7,1 | 6,5 | 3,2 |
| b* | | -11,0 | 1,7 | 0,4 | 1,3 |
| c* | | 11,1 | 7,3 | 6,5 | 3,5 |
| **Flachheit Transmission** (Wellenlänge bei Max./Min.) | nm | 2,9 470/609 | 1,6 630/527 | 1,6 630/536 | 1,8 630/533 |
| **Streuung 4 mm Dicke Normlicht D65,2°** | | | | | |
| Visuelle Bewertung | | 1 | 1 | 1 | 1 |

(fortgesetzt)

| Streuung 4 mm Dicke Normlicht D65,2° | | | | | |
|---|---|---|---|---|---|
| haze | % | 0,2 | 0,6 | 3,4 | 0,3 |
| **Thermische Ausdehnung** | | | | | |
| $\alpha_{20/300}$ | $10^{-6}$/K | -0,28 | 0,05 | 0,00 | 0,30 |
| $\alpha_{20/700}$ | $10^{-6}$/K | 0,12 | 0,34 | 0,27 | 0,55 |
| **Röntgenbeugung** | | | | | |
| Hauptkristallphase | | HQMK | HQMK | HQMK | HQMK |

Tabelle 4 (Fortsetzung): Eigenschaften erfindungsgemäßer Glaskeramiken und Vergleichsglaskeramik Beispiel 41.

| Beispiel Nr. | | **41** | **42** | **43** | **44** | **45** |
|---|---|---|---|---|---|---|
| **Glas Nr.** | | **32** | **33** | **34** | **35** | **36** |
| **Keramisierungs-programm** | | **2** | **1** | **2** | **2** | **2** |
| **Eigenschaften keramisiert** | | | | | | |
| **Transmission 4 mm Dicke Normlicht D65,2°** | | | | | | |
| 470 nm | % | 0,7 | 12,1 | 33,2 | 1,9 | 12,5 |
| 630 nm | % | 1,4 | 27,4 | 46,1 | 2,8 | 10,8 |
| 950 nm | % | 34,6 | 54,0 | 71,6 | 33,1 | 51,8 |
| 1600 nm | % | 71,3 | 72,1 | 72,3 | 69,9 | 82,7 |
| 3700 nm | % | 44,3 | 49,9 | 46,1 | 47,7 | 47,0 |
| **Farbkoordinaten (CIE) in Transmission** | | | | | | |
| x | | 0,389 | 0,389 | 0,342 | 0,350 | 0,302 |
| y | | 0,366 | 0,385 | 0,348 | 0,347 | 0,313 |
| Helligkeit Y | % | 0,9 | 19,6 | 38,5 | 2,1 | 10,3 |
| Farbabstand d | | 0,085 | 0,095 | 0,035 | 0,041 | 0,019 |
| **Farbkoordinaten (CIELAB) in Transmission** | | | | | | |
| L* | | 8,1 | 51,4 | 68,4 | 16,0 | 38,4 |
| a* | | 4,0 | 5,9 | 4,3 | 2,8 | 1,3 |
| b* | | 5,3 | 21,7 | 9,4 | 3,9 | -3,9 |
| c* | | 6,7 | 22,5 | 10,3 | 4,8 | 4,1 |
| **FlachheitTransmission** (Wellenlänge bei Max./Min.) | nm | 2,1 630/470 | 2,3 630/470 | 1,4 630/470 | 1,5 630/470 | 1,3 470/575 |
| **Streuung 4 mm Dicke Normlicht D65,2°** | | | | | | |
| Visuelle Bewertung | | 1 | 2 | 1 | 1 | 1 |
| haze | % | 2,5 | | 1,1 | 2,9 | 1,1 |
| **Thermische Ausdehnung** | | | | | | |
| $\alpha_{20/300}$ | $10^{-6}$/K | 1,23 | -0,37 | 0,32 | 0,23 | -0,14 |
| $\alpha_{20/700}$ | $10^{-6}$/K | 1,49 | 0,01 | 0,59 | 0,51 | 0,26 |

| Streuung 4 mm Dicke Normlicht D65,2° | | | | | | |
|---|---|---|---|---|---|---|
| **Röntgenbeugung** | | | | | | |
| Hauptkristallphase | | HQMK | HQMK | HQMK | HQMK | HQMK |

**Patentansprüche**

1. Transparente, eingefärbte Lithiumaluminiumsilikat-Glaskeramik mit einer Helligkeit Y von 0,1 % bis 80 % bei 4 mm Dicke,
   **dadurch gekennzeichnet, dass**
   Licht der Normlichtart D65 nach Durchtritt durch die Glaskeramik bei 4 mm Dicke einen Farbort im Weißbereich W1 aufweist, der im Chromatizitätsdiagramm CIExyY-2° durch folgende Koordinaten bestimmt ist:

| Weißbereich W1 | |
|---|---|
| X | Y |
| 0,27 | 0,21 |
| 0,22 | 0,25 |
| 0,32 | 0,37 |
| 0,45 | 0,45 |
| 0,47 | 0,34 |
| 0,36 | 0,29 |

   und **gekennzeichnet durch** eine Zusammensetzung, die in Gew.% auf Oxidbasis im Wesentlichen besteht aus:

| | |
|---|---|
| $Li_2O$ | 3-5 |
| $\Sigma\ Na_2O + K_2O$ | 0,1 -<4 |
| MgO | 0 - 3 |
| $\Sigma\ CaO + SrO + BaO$ | 0 - 5 |
| ZnO | 0 - 4 |
| $B_2O_3$ | 0 - 3 |
| $Al_2O_3$ | 18 - 25 |
| $SiO_2$ | 60 - 70 |
| $TiO_2$ | 1,5 - 5,5 |
| $ZrO_2$ | 0 - 2,5 |
| $SnO_2$ | 0,1 - <0,7 |
| $\Sigma\ TiO_2 + ZrO_2 + SnO_2$ | 3 - 6,5 |
| $P_2O_5$ | 0-5 |
| $MoO_3$ | 0,01 - 0,3 |
| $Fe_2O_3$ | 0,005 - 0,25 |
| $V_2O_5$ | 0 - 0,02. |

2. Lithiumaluminiumsilikat-Glaskeramik nach Anspruch 1, **dadurch gekennzeichnet, dass** sie weniger als 0,2 Gew.% $Nd_2O_3$ enthält.

3. Lithiumaluminiumsilikat-Glaskeramik nach einem der vorhergehenden Ansprüche, **dadurch gekennzeichnet, dass** der $V_2O_5$ -Gehalt weniger als 0,015 Gew.%, bevorzugt weniger als 0,01 Gew.%, beträgt.

4. Lithiumaluminiumsilikat-Glaskeramik nach einem der vorhergehenden Ansprüche,
**dadurch gekennzeichnet, dass**
die in Transmission mit Normlicht D65, 2° gemessenen Buntheit c* im CIELAB-Farbsystem bei einer Dicke von 4 mm höchstens 21, bevorzugt höchstens 15, besonders bevorzugt höchstens 7 beträgt.

5. Lithiumaluminiumsilikat-Glaskeramik nach einem der vorhergehenden Ansprüche,
**gekennzeichnet durch** einen flachen Verlauf der Transmissionskurve, bei dem das Verhältnis des höchsten zum niedrigsten Transmissionswert im Wellenlängenbereich von 470 bis 630 nm bei einer Dicke von 4 mm höchstens 2,5 beträgt.

6. Lithiumaluminiumsilikat-Glaskeramik nach einem der vorhergehenden Ansprüche,
**gekennzeichnet durch** eine Infrarot-Transmission von 45-85 % bei einer Wellenlänge von 1600 nm und einer Dicke von 4 mm.

7. Lithiumaluminiumsilikat-Glaskeramik nach einem der vorhergehenden Ansprüche, **dadurch gekennzeichnet, dass**
der $TiO_2$ -Gehalt mehr als 1,6 Gew.% und/oder der $ZrO_2$ -Gehalt 0,3-<2,2 Gew.% beträgt.

8. Lithiumaluminiumsilikat-Glaskeramik nach einem der Ansprüche 1 bis 7, **gekennzeichnet,**
**durch** eine Zusammensetzung, die in Gew.% auf Oxidbasis im Wesentlichen besteht aus:

| | |
|---|---|
| $Li_2O$ | 3 - 5 |
| $\Sigma\ Na_2O + K_2O$ | 0,2 - <3 |
| MgO | 0 - 1,5 |
| $\Sigma\ CaO + SrO + BaO$ | 0,2 - 4 |
| ZnO | 0 - 3 |
| $B_2O_3$ | 0 - 2 |
| $Al_2O_3$ | 18 - 24 |
| $SiO_2$ | 60 - 69 |
| $TiO_2$ | 1,5 - 5,5 |
| $ZrO_2$ | 0 - 2,5 |
| $SnO_2$ | 0,1 - <0,7 |
| $\Sigma\ TiO_2 + ZrO_2 + SnO_2$ | 3,5 - 6,3 |
| $P_2O_5$ | 0 - 3 |
| $MoO_3$ | 0,01 - 0,25 |
| $Fe_2O_3$ | >0,03 - 0,15 |
| $V_2O_5$ | 0 - <0,01. |

9. Lithiumaluminiumsilikat-Glaskeramik nach einem der vorhergehenden Ansprüche, **dadurch gekennzeichnet, dass**
die Glaskeramik bis auf unvermeidbare Verunreinigungen kein Arsen- und Antimonoxid enthält.

10. Lithiumaluminiumsilikat-Glaskeramik nach einem der vorhergehenden Ansprüche, **dadurch gekennzeichnet, dass**
sie Hochquarz-Mischkristalle als Hauptkristallphase enthält.

11. Verfahren zur Herstellung eines Artikels aus einer transparenten, eingefärbten Lithiumaluminiumsilikat-Glaskeramik nach einem der Ansprüche 1 bis 10,
**gekennzeichnet durch** die Schritte:

a) Bereitstellen eines Gemengesatzes aus technischen Rohstoffen enthaltend 20 bis 80 Gew.% Scherben,
b) Schmelze des Gemengesatzes und Läutern bei Temperaturen, die mindestens 1600 °C erreichen,
c) Einstellung eines reduzierten Zustandes in der Glasschmelze, bei dem keine Kristalle im Glas gebildet werden,
d) Abkühlen der Glasschmelze und Formgebung bei Temperaturen in der Nähe der Verarbeitungstemperatur $V_A$, wobei die gewünschte Form des Artikels erzeugt wird,
e) Kühlen in einem Entspannungsofen auf Raumtemperatur, wobei unerwünschte Spannungen im Glas entfernt werden,
f) Erhöhen der Temperatur des kristallisierbaren Glases auf den Temperaturbereich von etwa 680°C innerhalb von 3 bis 60 Minuten,

g) Erhöhen der Temperatur des kristallisierbaren Glases innerhalb des Temperaturbereichs der Keimbildung von 680 bis 800°C über einen Zeitraum von etwa 10 bis 100 Minuten,

h) Erhöhen der Temperatur des Kristallisationskeime enthaltenden Glases innerhalb von 5 bis 80 Minuten Dauer in den Temperaturbereich hoher Kristallwachstumsgeschwindigkeit von 850 bis 980°C,

i) Halten innerhalb des Temperaturbereiches bei der maximalen Temperatur von 850 bis 980°C bis zu 60 Minuten und danach

j) Abkühlen der erhaltenen Glaskeramik auf Raumtemperatur in weniger als 150 Minuten, wobei die Keramisierung des Glases eine Gesamtdauer von weniger als 300 min aufweist.

12. Verwendung eines Gegenstands, der eine Glaskeramik nach einem der Ansprüche 1 bis 10 umfasst, als Kochgeschirr, Kaminsichtscheibe, Koch-, Grill- oder Bratfläche, in Brandschutzverglasungen, Backofensichtscheibe, insbesondere für Pyrolyseherde, Abdeckung im Beleuchtungssektor, als Sicherheitsglas optional im Laminatverbund, als Trägerplatte oder Ofenauskleidung in thermischen Prozessen.

13. Verwendung eines Gegenstandes nach Anspruch 12 als dunkel eingefärbte Kochfläche, wobei der Gegenstand eine Platte mit einer Dicke von 2,5 bis 6 mm und einer Lichttransmission von 1,2 bis < 5 % ist, ohne Verwendung von aufgebrachten Farbfiltern oder -schichten zur Korrektur des Farbortes des durchgestrahlten Lichtes.

14. Verwendung eines Gegenstandes nach Anspruch 12 als eingefärbte Kochfläche, wobei der Gegenstand eine Platte mit einer Dicke von 2,5 bis 6 mm und einer Lichttransmission von 5 bis 80 % ist, wobei die Platte eine als blickdichte Ober- und/oder Unterseitenbeschichtung ausgeführte Maskierung aufweist und ohne Verwendung von aufgebrachten Farbfiltern oder - schichten zur Korrektur des durchgestrahlten Lichtes.

**Claims**

1. Transparent coloured lithium aluminium silicate glass ceramic having a brightness Y of 0.1% to 80% at a thickness of 4 mm,

   **characterized in that**

   D65 standard illuminant light, after passing through the glass ceramic at a thickness of 4 mm, has a colour locus in the white region W1 determined by the following coordinates in the chromaticity diagram CIExyY-2°:

   | White region W1 | |
   | --- | --- |
   | x | y |
   | 0.27 | 0.21 |
   | 0.22 | 0.25 |
   | 0.32 | 0.37 |
   | 0.45 | 0.45 |
   | 0.47 | 0.34 |
   | 0.36 | 0.29 |

   and **characterized by** a composition consisting, in % by weight based on oxides, essentially of:

   | | |
   | --- | --- |
   | $Li_2O$ | 3 - 5 |
   | $\Sigma\ Na_2O + K_2O$ | 0.1 - <4 |
   | MgO | 0 - 3 |
   | $\Sigma\ CaO + SrO + BaO$ | 0 - 5 |
   | ZnO | 0 - 4 |
   | $B_2O_3$ | 0 - 3 |
   | $Al_2O_3$ | 18 - 25 |
   | $SiO_2$ | 60 - 70 |

(continued)

| | |
|---|---|
| TiO$_2$ | 1.5 - 5.5 |
| ZrO$_2$ | 0 - 2.5 |
| SnO$_2$ | 0.1 - <0.7 |
| Σ TiO$_2$ + ZrO$_2$ + SnO$_2$ | 3 - 6.5 |
| P$_2$O$_5$ | 0 - 5 |
| MoO$_3$ | 0.01 - 0.3 |
| Fe$_2$O$_3$ | 0.005 - 0.25 |
| V$_2$O$_5$ | 0 - 0.02. |

2. Lithium aluminium silicate glass ceramic according to Claim 1,
   **characterized in that**
   it contains less than 0.2% by weight of Nd$_2$O$_3$.

3. Lithium aluminium silicate glass ceramic according to either of the preceding claims,
   **characterized in that** the V$_2$O$_5$ content is less than 0.015% by weight, preferably less than 0.01% by weight.

4. Lithium aluminium silicate glass ceramic according to any of the preceding claims,
   **characterized in that**
   the chroma c* in the CIELAB colour system, measured in transmission with D65 standard illuminant light, 2°, at a thickness of 4 mm, is not more than 21, preferably not more than 15, more preferably not more than 7.

5. Lithium aluminium silicate glass ceramic according to any of the preceding claims,
   **characterized by** a flat profile of the transmittance curve, where the ratio of the highest transmittance value to the lowest within the wavelength range from 470 to 630 nm is not more than 2.5 at a thickness of 4 mm.

6. Lithium aluminium silicate glass ceramic according to any of the preceding claims,
   **characterized by** an infrared transmittance of 45-85% at a wavelength of 1600 nm and a thickness of 4 mm.

7. Lithium aluminium silicate glass ceramic according to any of the preceding claims, **characterized in that** the TiO$_2$ content is more than 1.6% by weight and/or the ZrO$_2$ content is 0.3-<2.2% by weight.

8. Lithium aluminium silicate glass ceramic according to any one of Claims 1 to 7, **characterized by** a composition consisting, in % by weight based on oxides, essentially of:

| | |
|---|---|
| Li$_2$O | 3 - 5 |
| Σ Na$_2$O + K$_2$O | 0.2 - <3 |
| MgO | 0 - 1.5 |
| Σ CaO + SrO + BaO | 0.2 - 4 |
| ZnO | 0 - 3 |
| B$_2$O$_3$ | 0 - 2 |
| Al$_2$O$_3$ | 18 - 24 |
| SiO$_2$ | 60 - 69 |
| TiO$_2$ | 1.5 - 5.5 |
| ZrO$_2$ | 0 - 2.5 |
| SnO$_2$ | 0.1 - <0.7 |
| Σ TiO$_2$ + ZrO$_2$ + SnO$_2$ | 3.5 - 6.3 |
| P$_2$O$_5$ | 0 - 3 |
| MoO$_3$ | 0.01 - 0.25 |
| Fe$_2$O$_3$ | >0.03 - 0.15 |
| V$_2$O$_5$ | 0 - <0.01. |

9. Lithium aluminium silicate glass ceramic according to any of the preceding claims, **characterized in that** the glass ceramic does not contain any arsenic oxide and antimony oxide apart from unavoidable impurities.

10. Lithium aluminium silicate glass ceramic according to any of the preceding claims, **characterized in that** it contains high quartz solid solution as main crystal phase.

11. Process for producing an article of a transparent coloured lithium aluminium silicate glass ceramic according to any one of Claims 1 to 10,
**characterized by** the steps of:

a) providing a batch recipe of industrial raw materials containing 20% to 80% by weight of shards,
b) melting the batch recipe and refining at temperatures that reach at least 1600°C,
c) establishing a reduced state in the glass melt in which no crystals are formed in the glass,
d) cooling the glass melt and shaping at temperatures close to the working temperature $V_A$, producing the desired shape of the article,
e) cooling in an annealing oven to room temperature, with removal of unwanted stresses in the glass,
f) increasing the temperature of the crystallizable glass to the temperature region of about 680°C within 3 to 60 minutes,
g) increasing the temperature of the crystallizable glass within the temperature range of nucleation of 680 to 800°C over a period of about 10 to 100 minutes,
h) increasing the temperature of the glass containing crystallization nuclei to the temperature range of high crystal growth rate of 850 to 980°C within a period of 5 to 80 minutes,
i) holding within the temperature range at the maximum temperature of 850 to 980°C for up to 60 minutes and then
j) cooling the glass ceramic obtained to room temperature within less than 150 minutes, with a total duration for the ceramization of the glass of less than 300 minutes.

12. Use of an article comprising a glass ceramic according to any one of Claims 1 to 10 as cookware, stove sightglass, cooking, grilling or frying surface, in fire protection glazing, baking oven sightglass, especially for pyrolytic ovens, cover in the lighting sector, as safety glass, optionally in a laminate composite, as carrier plate or oven lining in thermal processes.

13. Use of an article according to Claim 12 as dark-coloured cooking surface, wherein the article is a plate having a thickness of 2.5 to 6 mm and a light transmittance of 1.2% to < 5%, without the use of applied colour filters or layers for correction of the colour locus of the light transmitted.

14. Use of an article according to Claim 12 as coloured cooking surface, wherein the article is a plate having a thickness of 2.5 to 6 mm and a light transmittance of 5% to 80%, wherein the plate has a mask executed as an opaque coating on the upper and/or lower side and without the use of applied colour filters or layers for correction of the light transmitted.

**Revendications**

1. Vitrocéramique de silicate de lithium-aluminium teintée transparente ayant une luminosité Y de 0,1 % à 80 % à 4 mm d'épaisseur,
**caractérisée en ce que**
de la lumière de l'illuminant standard D65 présente après passage à travers la vitrocéramique à 4 mm d'épaisseur un point de couleur dans la zone blanche WI, qui est déterminé dans le diagramme de chromaticité CIExyY-2° par les coordonnées suivantes :

| Zone blanche W1 | |
|---|---|
| X | y |
| 0,27 | 0,21 |
| 0,22 | 0,25 |
| 0,32 | 0,37 |
| 0,45 | 0,45 |

(suite)

| Zone blanche W1 | |
|---|---|
| X | y |
| 0,47 | 0,34 |
| 0,36 | 0,29 |

et **caractérisée par** une composition, qui est essentiellement constituée, en % en poids sur la base d'oxyde, par :

| | |
|---|---|
| $Li_2O$ | 3 à 5 |
| $\Sigma\ Na_2O + K_2O$ | 0,1 à < 4 |
| MgO | 0 à 3 |
| $\Sigma\ CaO + SrO + BaO$ | 0 à 5 |
| ZnO | 0 à 4 |
| $B_2O_3$ | 0 à 3 |
| $Al_2O_3$ | 18 à 25 |
| $SiO_2$ | 60 à 70 |
| $TiO_2$ | 1,5 à 5,5 |
| $ZrO_2$ | 0 à 2,5 |
| $SnO_2$ | 0,1 à < 0,7 |
| $\Sigma\ TiO_2 + ZrO_2 + SnO_2$ | 3 à 6,5 |
| $P_2O_5$ | 0 à 5 |
| $MoO_3$ | 0,01 à 0,3 |
| $Fe_2O_3$ | 0,005 à 0,25 |
| $V_2O_5$ | 0 à 0,02. |

2. Vitrocéramique de silicate de lithium-aluminium selon la revendication 1, **caractérisée en ce qu'**elle contient moins de 0,2 % en poids de $Nd_2O_3$.

3. Vitrocéramique de silicate de lithium-aluminium selon l'une quelconque des revendications précédentes, **caractérisée en ce que** la teneur en $V_2O_5$ est inférieure à 0,015 % en poids, de préférence inférieure à 0,01 % en poids.

4. Vitrocéramique de silicate de lithium-aluminium selon l'une quelconque des revendications précédentes, **caractérisée en ce que** l'intensité chromatique c* mesurée en transmission avec l'illuminant standard D65 à 2° dans le système de couleur CIELAB à une épaisseur de 4 mm est d'au plus 21, de préférence d'au plus 15, de manière particulièrement préférée d'au plus 7.

5. Vitrocéramique de silicate de lithium-aluminium selon l'une quelconque des revendications précédentes, **caractérisée par** une allure plate de la courbe de transmission, dans laquelle le rapport entre la valeur de transmission la plus élevée et la plus faible dans la plage de longueur d'onde de 470 à 630 nm à une épaisseur de 4 mm est d'au plus 2,5.

6. Vitrocéramique de silicate de lithium-aluminium selon l'une quelconque des revendications précédentes, **caractérisée par** une transmission infrarouge de 45 à 85 % à une longueur d'onde de 1 600 nm et une épaisseur de 4 mm.

7. Vitrocéramique de silicate de lithium-aluminium selon l'une quelconque des revendications précédentes, **caractérisée en ce que** la teneur en $TiO_2$ est supérieure à 1,6 % en poids et/ou la teneur en $ZrO_2$ est de 0,3 à < 2,2 % en poids.

8. Vitrocéramique de silicate de lithium-aluminium selon l'une quelconque des revendications 1 à 7, **caractérisée par** une composition qui est essentiellement constituée, en % en poids sur la base d'oxyde, par :

| | |
|---|---|
| $Li_2O$ | 3 à 5 |

(suite)

| $\Sigma$ Na$_2$O + K$_2$O | 0,2 à < 3 |
|---|---|
| MgO | 0 à 1,5 |
| $\Sigma$ CaO + SrO + BaO | 0,2 à 4 |
| ZnO | 0 à 3 |
| B$_2$O$_3$ | 0 à 2 |
| Al$_2$O$_3$ | 18 à 24 |
| SiO$_2$ | 60 à 69 |
| TiO$_2$ | 1,5 à 5,5 |
| ZrO$_2$ | 0 à 2,5 |
| SnO$_2$ | 0,1 à < 0,7 |
| $\Sigma$ TiO$_2$ + ZrO$_2$ + SnO$_2$ | 3,5 à 6,3 |
| P$_2$O$_5$ | 0 à 3 |
| MoO$_3$ | 0,01 à 0,25 |
| Fe$_2$O$_3$ | > 0,03 à 0,15 |
| V$_2$O$_5$ | 0 à < 0,01. |

**9.** Vitrocéramique de silicate de lithium-aluminium selon l'une quelconque des revendications précédentes, **caractérisée en ce que** la vitrocéramique ne contient pas d'oxyde d'arsenic et d'antimoine, à l'exception d'impuretés inévitables.

**10.** Vitrocéramique de silicate de lithium-aluminium selon l'une quelconque des revendications précédentes, **caractérisée en ce qu'**elle contient des cristaux mixtes de quartz bêta en tant que phase cristalline principale.

**11.** Procédé de fabrication d'un article en une vitrocéramique de silicate de lithium-aluminium teintée transparente selon l'une quelconque des revendications 1 à 10, **caractérisé par** les étapes suivantes :

a) la fourniture d'un mélange de matières premières techniques contenant 20 à 80 % en poids de calcin,
b) la fusion du mélange et l'affinage à des températures qui atteignent au moins 1 600 °C,
c) l'ajustement d'un état réduit dans la masse fondue de verre, dans lequel aucun cristal n'est formé dans le verre,
d) le refroidissement de la masse fondue de verre et le façonnage à des températures à proximité de la température d'usinage V$_A$, la forme souhaitée de l'article étant produite,
e) le refroidissement dans un four de détente à température ambiante, des tensions indésirables dans le verre étant éliminées,
f) l'augmentation de la température du verre cristallisable à la plage de température d'environ 680 °C en 3 à 60 minutes,
g) l'augmentation de la température du verre cristallisable dans la plage de température de formation de germes de 680 à 800 °C pendant une période de temps d'environ 10 à 100 minutes,
h) l'augmentation de la température du verre contenant des germes de cristallisation en une durée de 5 à 80 minutes dans la plage de température de vitesse de croissance cristalline élevée de 850 à 980 °C,
i) le maintien dans la plage de température à la température maximale de 850 à 980 °C jusqu'à 60 minutes, puis
j) le refroidissement de la vitrocéramique obtenue à température ambiante en moins de 150 minutes, la céramisation du verre présentant une durée totale de moins de 300 minutes.

**12.** Utilisation d'un objet qui comprend une vitrocéramique selon l'une quelconque des revendications 1 à 10 en tant qu'ustensile de cuisine, vitre de cheminée, surface de cuisson, de grillage ou de friture, dans des vitrages de protection contre le feu, une vitre de four, notamment pour cuisinière à pyrolyse, un élément de recouvrement dans le secteur de l'éclairage, en tant que verre de sécurité optionnellement en composite stratifié, en tant que plaque support ou habillage de four dans des processus thermiques.

**13.** Utilisation d'un objet selon la revendication 12 en tant que surface de cuisson teintée sombre, l'objet étant une plaque ayant une épaisseur de 2,5 à 6 mm et une transmission de la lumière de 1,2 à < 5 %, sans l'utilisation de filtres ou couches colorés appliqués pour la correction du point de couleur de la lumière le traversant.

**14.** Utilisation d'un objet selon la revendication 12 en tant que surface de cuisson teintée, l'objet étant une plaque ayant une épaisseur de 2,5 à 6 mm et une transmission de la lumière de 5 à 80 %, la plaque comprenant un masquage réalisé en tant que revêtement supérieur et/ou inférieur opaque et sans l'utilisation de filtres ou couches colorés appliqués pour la correction du point de couleur de la lumière le traversant.

Fig. 1 (a)

Fig. 1(b)

Fig. 2

Fig. 3 (a)

Fig. 3 (b)

Fig. 4

Fig. 5 (a)

Fig. 5 (b)

Fig. 6

Fig. 7 (a)

Fig. 7 (b)

Fig. 8 (a)

Fig. 8 (b)

Fig. 9 (a)

Fig. 9 (b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1837312 A1
- US 3788865 A
- US 4285728 F
- DE 19939787 C2
- US 20150274579 A1
- JP H5051235 A
- DE 2844030 A1
- WO 2010102859 A1
- WO 2010137000 A2
- US 2012085336 AA

- US 20130098903 A1
- US 20140146530 A1
- WO 2012076414 A1
- WO 2012168011 A1
- WO 2012076412 A1
- US 20160281961 A1
- EP 1074520 A1
- US 2016281961 A
- DE 102016101036 A1
- WO 2014170275 A2